(19) Europäisches Patentamt
European Patent Office
Office européen des brevets

(11) EP 1 215 216 B1

(12) EUROPEAN PATENT SPECIFICATION

(45) Date of publication and mention of the grant of the patent:
**27.07.2005 Bulletin 2005/30**

(51) Int Cl.[7]: **C08B 3/14**, C08B 3/16, G02B 5/30, G03C 1/76, C08J 5/18

(21) Application number: **01130000.1**

(22) Date of filing: **17.12.2001**

# (54) Cellulose ester of aromatic carboxylic acid

Celluloseester einer aromatischen Carbonsäure

Ester de cellulose d'acide carboxylique aromatique

(84) Designated Contracting States:
**DE**

(30) Priority: **15.12.2000 JP 2000382015**
**15.12.2000 JP 2000382016**
**24.01.2001 JP 2001016408**

(43) Date of publication of application:
**19.06.2002 Bulletin 2002/25**

(73) Proprietor: **Fuji Photo Film Co., Ltd.**
**Kanagawa-ken, 250-0123 (JP)**

(72) Inventors:
- **Kawamoto, Hiroshi**
  **Minami-Ashigara-shi, Kanagawa 250-0123 (JP)**
- **Okazaki, Masaki**
  **Minami-Ashigara-shi, Kanagawa 250-0123 (JP)**
- **Sata, Hiroaki**
  **Minami-Ashigara-shi, Kanagawa 250-0123 (JP)**
- **Kawanishi, Hiroyuki**
  **Minami-Ashigara-shi, Kanagawa 250-0123 (JP)**

(74) Representative: **Grünecker, Kinkeldey, Stockmair & Schwanhäusser Anwaltssozietät**
**Maximilianstrasse 58**
**80538 München (DE)**

(56) References cited:
**DE-C- 533 463**
**DE-C- 574 002**
**GB-A- 290 571**
**GB-A- 403 646**
**US-A- 2 175 357**

- **PATENT ABSTRACTS OF JAPAN vol. 10, no. 85 (C-336), 4 April 1985 (1985-04-04) & JP 60 217202 A (DAICEL ), 30 October 1985 (1985-10-30) & DATABASE WPI Week 198550 Derwent Publications Ltd., London, GB; AN 1985-313205**
- **PATENT ABSTRACTS OF JAPAN vol. 2000, no. 7, 29 September 2000 (2000-09-29) & JP 2000 095876 A (FUJI PHOTO FILM), 4 April 2000 (2000-04-04) & DATABASE WPI Week 200027 Derwent Publications Ltd., London, GB; AN 2000-313033**
- **PATENT ABSTRACTS OF JAPAN vol. 18, no. 542 (C-1261), 17 October 1994 (1994-10-17) & JP 06 192168 A (DAICEL CHEM IND LTD)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 215 216 B1

## Description

The present invention relates to a photographic material and an optical material having a cellulose acylate film.

Cellulose acylate, which is a cellulose ester of a carboxylic acid, is a representative cellulose derivative used in various technological fields, particularly, in the form of a fiber, a film, a binder or a plastic.

Cellulose acetate (which is a cellulose ester of acetic acid), particularly cellulose triacetate (in which most of hydroxyl groups in cellulose form ester bonds with acetic acid) is the most commonly used cellulose acylate. Since a cellulose triacetate film is strong and noncombustible, various photographic materials and optical materials comprise the cellulose triacetate films. The cellulose triacetate film is a representative photographic support. Since the cellulose triacetate film has an optical isotropy, the film is used in a liquid crystal display having a large market, which has recently been expanded. In a liquid crystal display, the cellulose triacetate film is generally used as a protective film of polarizing plate, a support of optical compensatory sheet or a color filter.

When a cellulose triacetate film is used as a photographic support or used in used in optical materials, the film must have optical characters and other properties good enough to satisfy strictly required conditions. For example, the film must be excellent in optical isotropy, transparency, mechanical strength; durability and dimensional (size) stability.

While the cellulose triacetate was used for long time, various improvements have been proposed about starting materials, a synthesizing process, a product forming process and use of a product. Even if the conventional improvements are adopted, it is very difficult to satisfy the recently required conditions on the optical characters and other properties. It seems that the recently required conditions might exceed the limitation of the conventional improvements.

US-A-2175357 discloses a process for the preparation of mixed ester derivatives of cellulose which are soluble in organic solvents. The derivatives are used for the fabrication of shaped materials.

GB-A-403646 discloses a process for the preparation of aromatic acid esters of cellulose which may be used as films.

DE-C-574002 discloses a process for the esterification of cellulose. The ester products are shaped into articles which may be colored with a dye.

JP-A-60217202 discloses polysaccharide derivatives useful as a carrier for chromatography, said derivatives being obtained by esterifying a polysaccharide with an optionally substituted aromatic carboxylic acid.

DE-C-533463 discloses a process for the preparation of mixed esters of cellulose which may be formed into shaped articles.

GB-A-290571 discloses mixed esters of cellulose. Suitable esterifying agents include aliphatic carboxylic acids, aromatic carboxylic acids and mixtures thereof.

JP-A-6192168 is directed to the optical resolution of alpha-arylpropionic acids in which cellulose esters of aromatic carboxylic acids are used as separating agents.

It is difficult for conventional cellulose triacetate to satisfy the recently required conditions on the optical characters and other properties, particularly, on optical isotropy, water resistance and dimensional stability.

The present inventors have further studied cellulose acetate propionate, and found that the known cellulose acetate propionate has a low degree of crystallinity. Therefore, a film made of the known cellulose acetate propionate is soft and has a low mechanical strength.

The present invention provides:

1. A photographic material which comprises a support consisting of a cellulose acylate film and a silver halide emulsion layer provided on the support, wherein the cellulose acylate film comprises a cellulose ester of an aromatic carboxylic acid, said aromatic carboxylic acid having a substituent group selected from the group consisting of a halogen atom, cyano, an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 1 to 20 carbon atoms, a carbonamido group having 1 to 20 carbon atoms, a sulfonamido group having 1 to 20 carbon atoms and an ureido group having 1 to 20 carbon atoms.

2. An optical material which comprises two protective films consisting of cellulose acylate films and a polarizing membrane provided between the films, wherein at least one of the films comprises a cellulose ester of an aromatic carboxylic acid, said aromatic carboxylic acid having a substituent group selected from the group consisting of a halogen atom, cyano, an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 1 to 20 carbon atoms, a carbonamido group having 1 to 20 carbon atoms, a sulfonamido group having 1 to 20 carbon atoms and an ureido group having 1 to 20 carbon atoms.

3. An optical material which comprises a support consisting of a cellulose acylate film and an optical anisotropic

layer formed from liquid crystal molecules provided on the support, wherein the cellulose acylate film comprises a cellulose ester of an aromatic carboxylic acid, said aromatic carboxylic acidhaving a substituent group selected from the group consisting of a halogen atom, cyano, an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 1 to 20 carbon atoms, a carbonamido group having 1 to 20 carbone atoms, a sulfonamido group having 1 to 20 carbon atoms and an ureido group having 1 to 20 carbon atoms.

4. A photographic material which comprises a support consisting of a cellulose acylate film and a silver halide emulsion layer provided on the support, wherein the cellulose acylate film comprises a cellulose ester of a carboxylic acid, said carboxylic acid being a mixture of an aromatic carboxylic acid and an aliphatic carboxylic acid.

5. An optical material which comprises two protective films consisting of cellulose acylate films and a polarizing membrane provided between the films, wherein at least one of the films comprises a cellulose ester of an carboxylic acid, said carboxylic acid being a mixture of an aromatic carboxylic acid and an aliphatic carboxylic acid.

6. An optical material which comprises a support consisting of a cellulose acylate film and an optical anisotropic layer formed from liquid crystal molecules provided on the support, wherein the cellulose acylate film comprises a cellulose ester of a carboxylic acid, said carboxylic acid being a mixture of an aromatic carboxylic acid and an aliphatic carboxylic acid.

Preferred embodiments of the present invention are set forth in the sub-claims.

The cellulose acylate used according to the present invention is excellent in optical isotropy, excellent in water resistance and durability, and excellent in dimensional stability.

The present inventors have noted and studied a cellulose ester of an aromatic carboxylic acid in place of conventional cellulose triacetate. Some aromatic carboxylic acids such as benzoic acid, phthalic acid and a half ester thereof (e.g., monomethyl phthalate) have been proposed to form an ester with cellulose triacetate. However, the known cellulose esters of the aromatic carboxylic acids do not have physical or optical properties as expected. Only cellulose ester of phthalic half ester has been used practically as coating for a drug that should pass through stomach.

The present inventors have studied the cellulose ester, and surprisingly found that the physical and optical properties of cellulose ester can be improved by introducing a specific substituent group (namely a halogen atom, cyano, an alkyl, an alkoxy, an aryl group, an aryloxy group, an acyl, a carbonamido group, a sulfonamido group or an ureido group) into an aromatic acid of the ester. The inventors further found that the physical and optical properties of cellulose ester can also be improved by using a mixture of an aromatic carboxylic acid and an aliphatic carboxylic acid in the cellulose ester. The above-mentioned cellulose acylate is particularly excellent in optical isotropy, water resistance (hydrophobic characteristic) and dimensional stability. Accordingly, various products excellent in excellent in optical isotropy, water resistance and dimensional stability can be produced by using the cellulose acylate.

[Cellulose acylate]

Cellulose acylate is a compound in which hydroxyl groups of cellulose are partially or fully esterified with a carboxylic acid. The cellulose acylate used according to the present invention is a cellulose ester of an aromatic carboxylic acid.

In a glucose unit having β-1,4-glycosido linkages forming cellulose, all groups represented by R in the following formula (I) are hydrogen atoms ($R^1$: -H). In the cellulose acylate used for the film used in the invention, the groups represented by R in the formula (I) are partially or fully substituted with aromatic acyl groups ($R^2$: -CO-AR). The groups represented by R in the formula (I) can also be partially substituted with aliphatic acyl groups ($R^3$: -CO-AL).

(I)

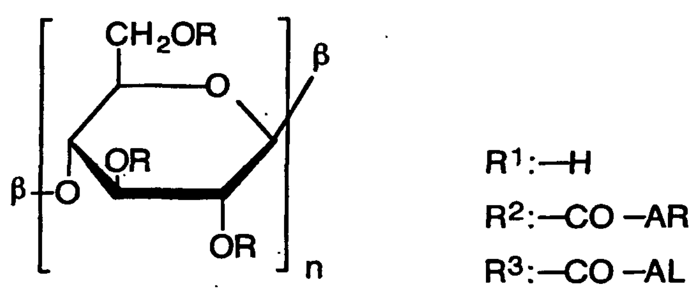

In the formula (I), β is a β-1,4-glycosido linkage; n is polymerization degree of cellulose acylate; R is $R^1$, $R^2$ or $R^3$, and $R^2$ is essential while $R^1$ and $R^3$ is optional; AR is an aromatic group, which can have a substituting group; and AL is an aliphatic group.

The aromatic carboxylic acid has an aromatic hydrocarbon ring, an aromatic heterocyclic ring or a condensed ring thereof. The aromatic hydrocarbon ring or a condensed ring between the aromatic hydrocarbon ring and the aromatic heterocyclic ring is preferred, and an aromatic hydrocarbon ring is more preferred.

Examples of the aromatic hydrocarbon rings include benzene ring, indene ring, naphthalene ring, azulene ring, fluorene ring, phenanthrene ring, anthracene ring, ace-naphthylene ring, biphenylene ring, naphthacene ring and pyrene ring. Benzene ring, naphthalene ring and anthracene ring are preferred, benzene ring and naphthalene ring are more preferred, and benzene ring is most preferred. In other words, the aromatic carboxylic acid most preferably is benzoic acid.

Examples of the condensed rings between the aromatic hydrocarbon ring and an aromatic heterocyclic ring include benzotriazole ring, quinoline ring, isoquinoline ring, chromene ring, phthalazine ring and indole ring.

An aliphatic hydrocarbon ring may be condensed with the aromatic hydrocarbon ring. Examples of the condensed rings include indane ring.

A non-aromatic hydrocarbon ring may be condensed with the aromatic hydrocarbon ring. Examples of the condensed rings include chroman ring and indoline ring.

The aromatic carboxylic acid preferably has a substituent group. In the case where the aromatic carboxylic acid is benzoic acid, at least one substituent group is preferably attached to a meta-position or para-position of the benzoic acid. It is also preferred that no substituent group is attached to an ortho-position of the benzoic acid.

The aromatic carboxylic acid preferably has one to five substituent groups, more preferably has one to four substituent groups, further preferably has one to three substituent groups, and most preferably has one or two substituent groups.

Examples of the substituent groups of the aromatic carboxylic acid include a halogen atom, cyano, hydroxyl, nitro, silyl, silyloxy, carbamoyl, carbamoyloxy, sulfamoyl, sulfamoylamino, phosphino, phosphinyl, phosphono, phosphinyloxy, phosphonoxy, phosphinylamino, phosphonoamino, an aliphatic group, an aromatic group, a heterocyclic group, -O-R, -S-R, -CO-R, -O-CO-R, -CO-NH-R, $-CO-N(-R)_2$, -O-CO-NH-R, $-O-CO-N(-R)_2$, -CO-O-R, -O-CO-O-R, -NH-R, $-N(-R)_2$, -NH-CO-R, -NH-CO-NH-R, $-NH-CO-N(-R)_2$, -NH-CO-R, $-SO_2-NH-R$, $-SO_2-N(-R)_2$, $-NH-SO_2-NH-R$, $-NH-SO_2- N(-R)_2$, $-NH-SO_2-R$, -SO-R, $-SO_2-R$, $-N(-CO-R)_2$, -PH-R, $-P(-R)_2$, -PH-O-R, -P(-R)-O-R, $-P(-O-R)_2$, -PH(=O) -R, $-P(=O)(-R)_2$, -PH(=O)-O-R, -P(=O) (-R)-O-R, $-P(=O)(-O-R)_2$, -O-PH(=O)-R, $-O-P(=O)(-R)_2$, -O-PH(=O)-O-R, -O-P (=O) (-R)-O-R, $-O-P(=O)(-O-R)_2$, -NH-PH(=O)-R, $-NH-P(=O)(-R)_2$, -NH-PH(=O)-O-R, -NH-P(=O) (-R)-O-R, -NH-P (=O) $(-O-R)_2$, $-SiH_2-R$, $-SiH(-R)_2$, $-Si(-R)_3$, $-O-SiH_2-R$, $-O-SiH(-R)_2$ and $-O-Si(-R)_3$.

The group represented by R means an aliphatic group, an aromatic group or a heterocyclic group. Two or more groups represented by R in the substituent group can be different from each other.

The aliphatic group means an alkyl group, a substituted alkyl group, an alkenyl group, a substituted alkenyl group, an alkynyl group or a substituted alkynyl group.

The alkyl group can have a cyclic or branched structure. The alkyl group preferably has 1 to 30 carbon atoms. Examples of the alkyl groups include methyl, ethyl, n-propyl, isopropyl, t-butyl, n-octyl, eicosyl, 2-ehtylhexyl, cyclohexyl, cyclopentyl, 4-n-dodecyl-cyclohexyl, bicyclo[1,2,2]heptane-2-yl and bicyclo[2,2,2]octane-3-yl.

The alkyl moiety of the substituted alkyl group is the same as the above-mentioned alkyl group.

Examples of the substituent groups of the substituted alkyl groups include a halogen atom, cyano, hydroxyl, nitro, silyl, silyloxy, carbamoyl, carbamoyloxy, sulfamoyl, sulfamoylamino, phosphino, phosphinyl, phosphono, phosphinyloxy, phosphonoxy, phosphinylamino, phosphonoamino, an aromatic group, a heterocyclic group, -O-R, -S-R, -CO-R, -O-CO-R, -CO-NH-R, $-CO-N(-R)_2$, -O-CO-NH-R, $-O-CO-N(-R)_2$, -CO-O-R, -O-CO-O-R, -NH-R, $-N(-R)_2$, -NH-CO-R, -NH-CO-NH-R, $-NH-CON(-R)_2$, -NH-CO-R, $-SO_2-NH-R$, $-SO_2-N(-R)_2$, $-NH-SO_2-NH-R$, $-NH-SO_2- N(-R)_2$, $-NH-SO_2-R$, -SO-R, $-SO_2-R$, $-N(-CO-R)_2$, -PH-R, $-P(-R)_2$, -PH-O-R, -P(-R)-O-R, $-P(-O-R)_2$, -PH(=O)-R, $-P(=O)(-R)_2$, -PH(=O)-O-R, -P(=O) (-R)-O-R, $-P(=O)(-O-R)_2$, -O-PH(=O)-R, $-O-P(=O)(-R)_2$, -O-PH(=O)-O-R, -O-P(=O) (-R)-O-R, $-O-P(=O)(-O-R)_2$, -NH-PH(=O)-R, $-NH-P(=O)(-R)_2$, -NH-PH(=O)-O-R, -NH-P(=O) (-R)-O-R, $-NH-P(=O)(-O-R)_2$, $-SiH_2-R$, $-SiH(-R)_2$, $-Si(-R)_3$, $-O-SiH_2-R$, $-O-SiH(-R)_2$ and $-O-Si(-R)_3$.

The group represented by R means an aliphatic group, an aromatic group or a heterocyclic group. Two or more groups represented by R in the substituent group can be different from each other.

Examples of the substituted alkyl groups include 2-chloroethyl and 2-cyanoethyl.

The alkenyl group can have a cyclic or branched structure. The alkenyl group preferably has 2 to 30 carbon atoms. Examples of the alkenyl groups include vinyl, allyl, prenyl, geranyl, oleyl, 2-cyclopenene-1-yl, 2-cyclohexene-1-yl, bicyclo[1,2,2]hepto- 2-ene-1-yl and bicyclo[2,2,2]octo-2-ene-4-yl.

The alkenyl moiety of the substituted alkenyl group is the same as the above-mentioned alkenyl group.

The substituent groups of the substituted alkenyl groups are the same as the substituent groups of the substituted alkyl groups.

The alkynyl group can have a cyclic or branched structure. The alkynyl group preferably has 2 to 30 carbon atoms. Examples of the alkynyl groups include ethynyl and propargyl.

The alkynyl moiety of the substituted alkynyl group is the same as the above-mentioned alkynyl group.

The substituent groups of the substituted alkynyl groups are the same as the substituent groups of the substituted alkyl groups.

Examples of the substituted alkynyl groups include trimethylsilylethynyl.

The aromatic group means an aryl group or a substituted aryl group.

The aryl group preferably has 6 to 30 carbon atoms. Examples of the aryl groups include phenyl and naphthyl.

The aryl moiety of the substituted aryl group is the same as the above-mentioned aryl group.

Examples of the substituent groups of the substituted aryl group include a halogen atom, cyano, hydroxyl, nitro, silyl, silyloxy, carbamoyl, carbamoyloxy, sulfamoyl, sulfamoylamino, phosphino, phosphinyl, phosphono, phosphinyloxy, phosphonoxy, phosphinylamino, phosphonoamino, an aliphatic group, an aromatic group, a heterocyclic group, -O-R, -S-R, -CO-R, -O-CO-R, -CO-NH-R, $-CO-N(-R)_2$, -O-CO-NH-R, $-O-CO-N(-R)_2$, -CO-O-R, -O-CO-O-R, -NH-R, $-N(-R)_2$, -NH-CO-R, -NH-CO-NH-R, $-NH-CO-N(-R)_2$, -NH-CO-R, $-SO_2-NH-R$, $-SO_2-N(-R)_2$, $-NH-SO_2-NH-R$, $-NH-SO_2-N(-R)_2$, $-NH-SO_2-R$, -SO-R, $-SO_2-R$, $-N(-COR)_2$, -PH-R, $-P(-R)_2$, -PH-O-R, -P(-R)-O-R, $-P(-O-R)_2$, -PH(=O)-R, $-P(=O)(-R)_2$, -PH(=O)-O-R, -P(=O)(-R)-O-R, $-P(=O)(-O-R)_2$, -O-PH(=O)-R, $-O-P(=O)(-R)_2$, -O-PH(=O)-O-R, -O-P(=O)(-R)-O-R, $-O-P(=O)(-O-R)_2$, -NH-PH(=O)-R, $-NH-P(=O)(-R)_2$, -NH-PH(=O)-O-R, -NH-P(=O)(-R)-O-R, $-NH-P(=O)(-O-R)_2$, $-SiH_2-R$, $-SiH(-R)_2$, $-Si(-R)_3$, $-O-SiH_2-R$, $-O-SiH(-R)_2$ and $-O-Si(-R)_3$.

The group represented by R means an aliphatic group, an aromatic group or a heterocyclic group. Two or more groups represented by R in the substituent group can be different from each other.

Examples of the substituted aryl groups include p-tolyl, m-chlorophenyl and o-hexadecanoylaminophenyl.

The heterocyclic groups include a non-substituted heterocyclic group and a substituted heterocyclic group. The heterocyclic group can be aromatic. The heterocyclic ring of the heterocyclic group preferably is a five-membered ring or a six-membered ring. The heterocyclic group preferably has 3 to 30 carbon atoms.

The substituent groups of the substituted heterocyclic groups are the same as the substituent groups of the substituted aryl groups.

Examples of the heterocyclic groups include 2-furyl, 2-thienyl, 2-pirimidinyl and 2-benzothiazoryl.

The substituent group of the aromatic carboxylic acid preferably is a halogen atom, cyano, an alkyl group, an alkoxy group, an aryl group, an aryloxy group, a heterocyclic group, an acyl group, a carbonamido group, a sulfonamido group, an ureido group, an aralkyl group, nitro, an alkoxycarbonyl group, an aryloxycarbonyl group, an aralkyloxycarbonyl group, a carbamoyl group, a sulfamoyl group, an acyloxy group, an alkenyl group, an alkynyl group, an alkylsulfonyl group, an arylsulfonyl group, an alkyloxysulfonyl group, an aryloxysulfonyl group, an alkylsulfonyloxy group or an aryloxysulfonyl group.

In the case that the ester is formed by cellulose with an aromatic carboxylic acid only, the substituent group of the aromatic carboxylic acid more preferably is a halogen atom, cyano, an alkyl group (preferably having 1 to 20 carbon atoms), an alkoxy group (preferably having 1 to 20 carbon atoms), an aryl group (preferably having 6 to 20 carbon atoms), an aryloxy group (preferably having 6 to 20 carbon atoms), an acyl group (preferably having 1 to 20 carbon atoms), a carbonamido group (preferably having 1 to 20 carbon atoms), a sulfonamide group (preferably having 1 to 20 carbon atoms) or an ureido group (preferably having 1 to 20 carbon atoms). The substituent group further preferably is a halogen atom, cyano, an alkyl group (preferably having 1 to 12 carbon atoms), an alkoxy group (preferably having 1 to 12 carbon atoms), an aryloxy group (preferably having 6 to 12 carbon atoms), an acyl group (preferably having 1 to 12 carbon atoms) or a carbonamido group (preferably having 1 to 12 carbon atoms). The substituent group most preferably is a halogen atom, an alkyl group (preferably having 1 to 6 carbon atoms) or an alkoxy group (preferably having 1 to 6 carbon atoms).

In the case that the ester is formed by cellulose with an aromatic carboxylic acid and an aliphatic carboxylic acid, the substituent group of the aromatic carboxylic acid more preferably is a halogen atom, cyano, an alkyl group (preferably having 1 to 20 carbon atoms), an alkoxy group (preferably having 1 to 20 carbon atoms), an aryl group (preferably having 6 to 20 carbon atoms), an aryloxy group (preferably having 6 to 20 carbon atoms), a heterocyclic group (preferably having 5 to 20 carbon atoms), an acyl group (preferably having 1 to 20 carbon atoms), a carbonamido group (preferably having 1 to 20 carbon atoms), a sulfonamide group (preferably having 1 to 20 carbon atoms) or an aralkyl group (preferably having 7 to 20 carbon atoms). The substituent group further preferably is a halogen atom, cyano, an alkyl group (preferably having 1 to 12 carbon atoms), an alkoxy group (preferably having 1 to 12 carbon atoms) or an aryloxy group (preferably having 6 to 12 carbon atoms). The substituent group furthermore preferably is a halogen atom, an alkyl group (preferably having 1 to 6 carbon atoms) or an alkoxy group (preferably having 1 to 6 carbon atoms). The substituent group most preferably is an alkyl group (preferably having 1 to 6 carbon atoms) or an alkoxy group (preferably having 1 to 6 carbon atoms)

The halogen atoms include fluorine atom, chlorine atom, bromine atom and iodine atom.

The alkyl group can have a cyclic or branched structure. The alkyl group preferably has 1 to 20 carbon atoms,

more preferably has 1 to 12 carbon atoms, further preferably has 1 to 6 carbon atoms, and most preferably has 1 to 4 carbon atoms. Examples of the alkyl groups include methyl, ethyl, propyl, isopropyl, butyl, t-butyl, hexyl, cyclohexyl, octyl and 2-ethylhexyl.

The alkoxy group can have a cyclic or branched structure. The alkoxy group preferably has 1 to 20 carbon atoms, more preferably has 1 to 12 carbon atoms, further preferably has 1 to 6 carbon atoms, and most preferably has 1 to 4 carbon atoms. The alkoxy group can be substituted with another alkoxy group. Examples of the alkoxy groups include methoxy, ethoxy, 2-methoxyethoxy, 2-methoxy-2-ethoxyethoxy, butyloxy, hexyloxy and octyloxy.

The aryl group preferably has 6 to 20 carbon atoms, and more preferably has 6 to 12 carbon atoms. Examples of the aryl groups include phenyl and naphthyl.

The aryloxy group preferably has 6 to 20 carbon atoms, and more preferably has 6 to 12 carbon atoms. Examples of the aryloxy groups include phenoxy and naphthoxy.

The heterocyclic group preferably has 5 to 20 carbon atoms, and more preferably has 5 to 12 carbon atoms. Examples of the heterocyclic groups include pyridyl. phenyl and naphthyl.

The acyl group preferably has 1 to 20 carbon atoms, and more preferably has 1 to 12 carbon atoms. Examples of the acyl groups include formyl, acetyl and benzoyl.

The carbonamido group preferably has 1 to 20 carbon atoms, and more preferably has 1 to 12 carbon atoms. Examples of the carbonamido groups include acetamido and benzamido.

The sulfonamido group preferably has 1 to 20 carbon atoms, and more preferably has 1 to 12 carbon atoms. Examples of the sulfonamido groups include methanesulfonamide, benzenesulfonamide and p-toluenesulfonamide.

The ureido group preferably has 1 to 20 carbon atoms, and more preferably has 1 to 12 carbon atoms. Examples of the ureido groups include (non-substituted) ureido.

The aralkyl group preferably has 7 to 20 carbon atoms, and more preferably has 7 to 12 carbon atoms. Examples of the aralkyl groups include benzyl, phenethyl and naphthylmethyl.

The alkoxycarbonyl group preferably has 1 to 20 carbon atoms, and more preferably has 2 to 12 carbon atoms. Examples of the alkoxycarbonyl groups include methoxycarbonyl.

The aryloxycarbonyl group preferably has 7 to 20 carbon atoms, and more preferably has 7 to 12 carbon atoms. Examples of the aryloxycarbonyl groups include phenoxycarbonyl.

The aralkyloxycarbonyl group preferably has 8 to 20 carbon atoms, and more preferably has 8 to 12 carbon atoms. Examples of the aralkyloxycarbonyl groups include benzyloxycarbonyl.

The carbamoyl group preferably has 1 to 20 carbon atoms, and more preferably has 1 to 12 carbon atoms. Examples of the carbamoyl groups include (non-substituted) carbamoyl and N-methylcarbamoyl.

The sulfamoyl group preferably has not more than 20 carbon atoms, and more preferably has not more than 12 carbon atoms. Examples of the sulfamoyl groups include (non-substituted) sulfamoyl and N-methylsulfamoyl.

The acyloxy group preferably has 1 to 20 carbon atoms, and more preferably has 2 to 12 carbon atoms. Examples of the acyloxy groups include acetoxy and benzoyloxy.

The alkenyl group preferably has 2 to 20 carbon atoms, and more preferably has 2 to 12 carbon atoms. Examples of the alkenyl groups include vinyl, allyl and isopropenyl.

The alkynyl group preferably has 2 to 20 carbon atoms, and more preferably has 2 to 12 carbon atoms. Examples of the alkynyl groups include ethynyl.

The alkylsulfonyl group preferably has 1 to 20 carbon atoms, and more preferably has 1 to 12 carbon atoms.

The arylsulfonyl group preferably has 6 to 20 carbon atoms, and more preferably has 6 to 12 carbon atoms.

The alkyloxysulfonyl group preferably has 1 to 20 carbon atoms, and more preferably has 1 to 12 carbon atoms.

The aryloxysulfonyl group preferably has 6 to 20 carbon atoms, and more preferably has 6 to 12 carbon atoms.

The alkylsulfonyloxy group preferably has 1 to 20 carbon atoms, and more preferably has 1 to 12 carbon atoms.

The aryloxysulfonyl group preferably has 6 to 20 carbon atoms, and more preferably has 6 to 12 carbon atoms.

Examples of the aromatic acyl groups ($R^2$: -CO-Ar in the formula (I)) derived from the aromatic carboxylic acids are shown below.

(0)

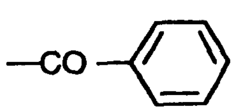

(1)

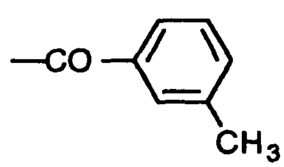

(2)

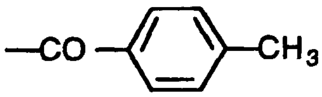

(3)

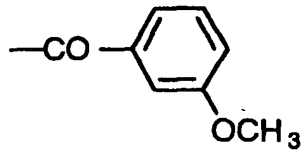

(4)

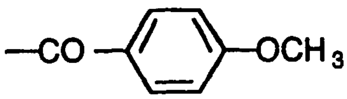

(5)

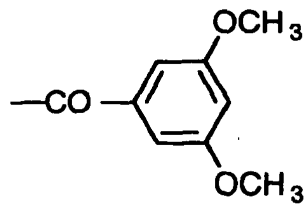

(6)

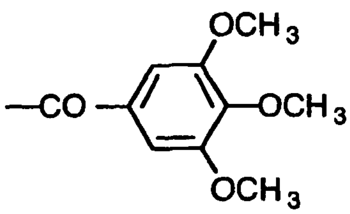

(7)

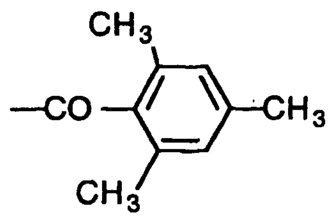

(8)

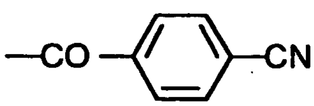

(9)

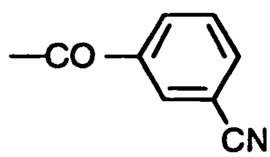

(10)

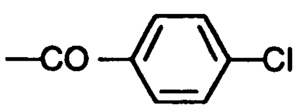

(11)

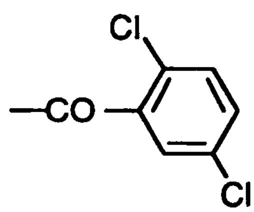

(12)

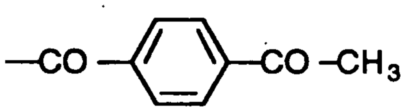

(13)

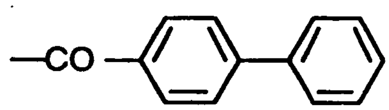

(14)

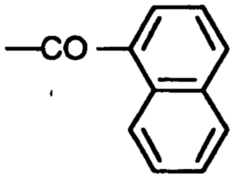

(15)

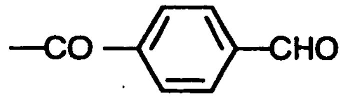

(16)

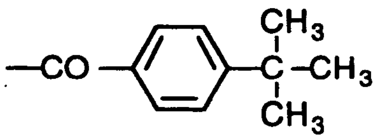

(17)

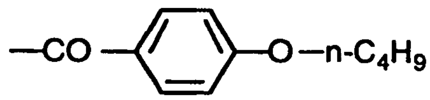

(18)

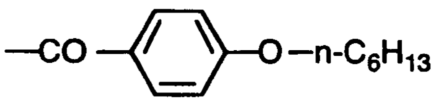

(19)

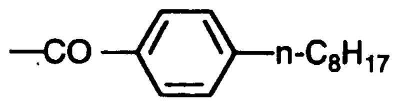

(20)

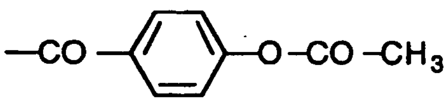

(21)

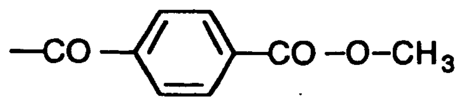

(22)

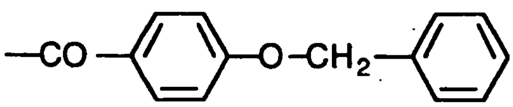

(23)

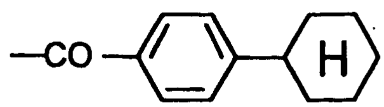

(24)

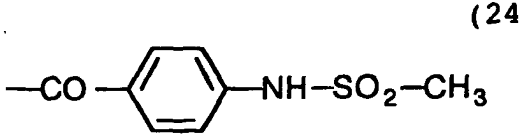

(25)

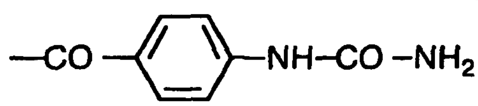

(26)

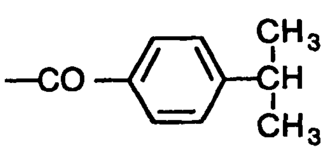

(27)

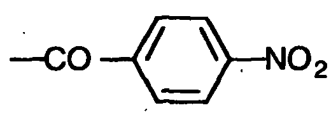

(28)

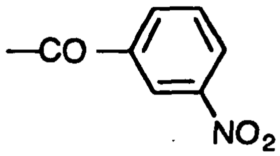

(29)

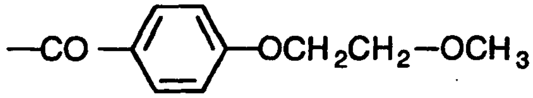

(30)

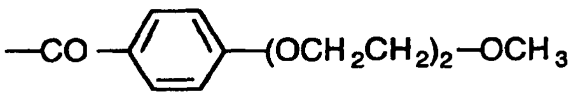

(31)

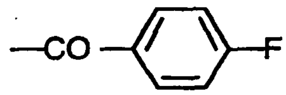

(32)

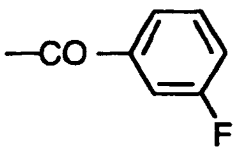

(33)

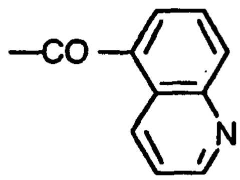

(34)

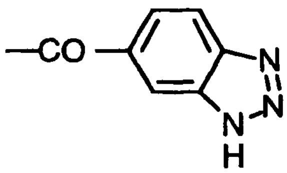

(35)

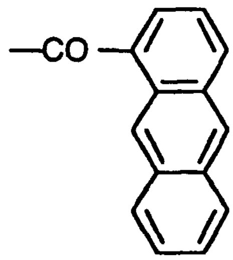

(36)

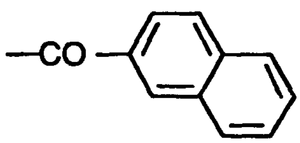

(37)

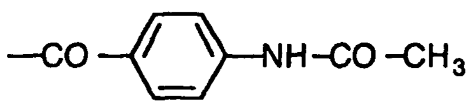

(38)

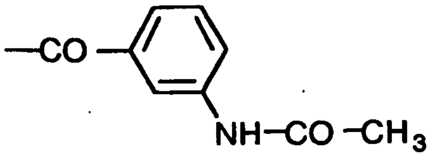

(39)

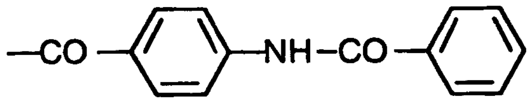

(40)

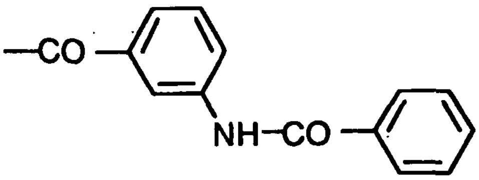

(41)

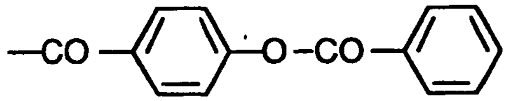

(42)

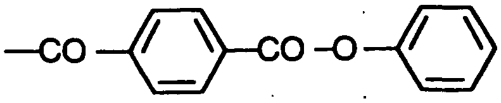

(43)

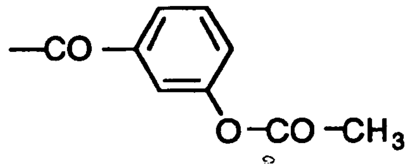

(44)

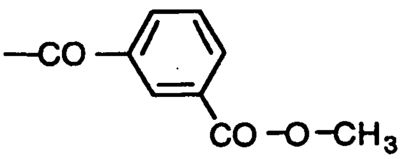

(45)

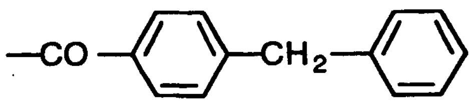

(46)

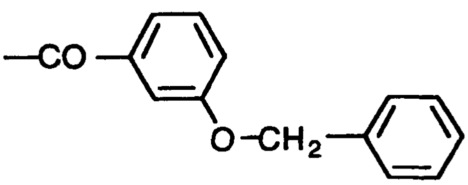

(47)

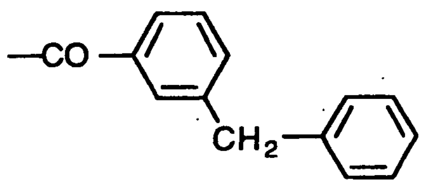

(48)

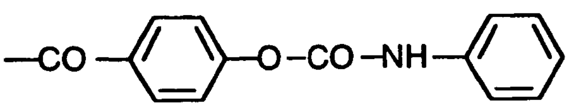

(49)

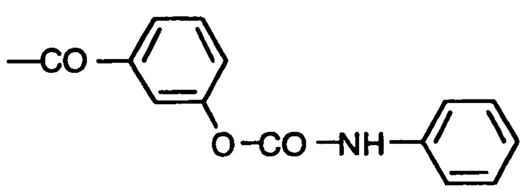

(50)

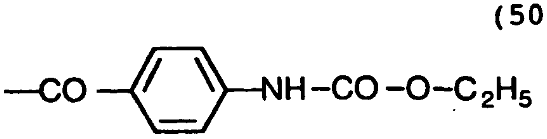

(51)

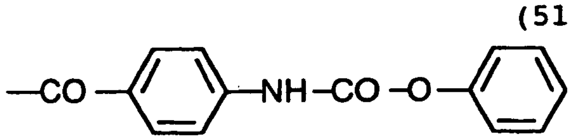

(52)

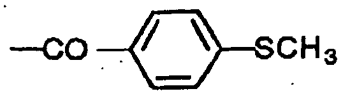

(53)

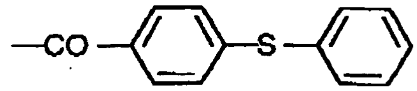

(54)

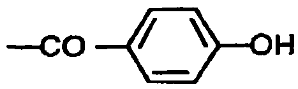

(55)

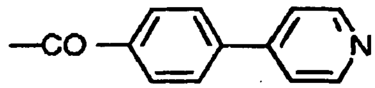

(56)

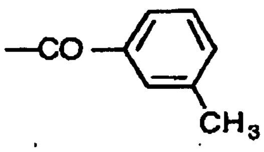

(57)

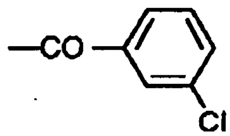

(58)

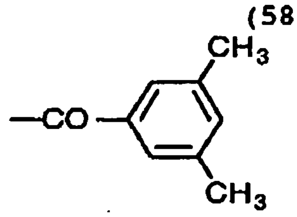

(59)

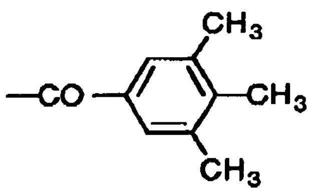

(60)

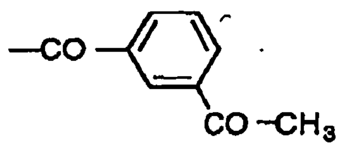

(61)

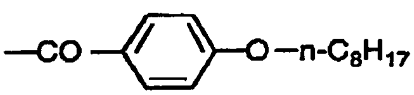

(62)

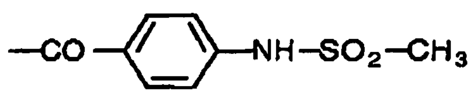

(63)

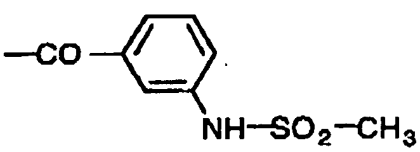

(64)

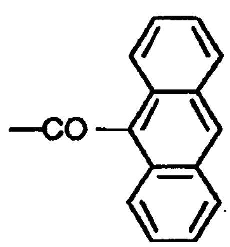

One glucose unit of cellulose has three hydroxyl groups. The three hydroxyl groups are partially or fully esterified with the aromatic carboxylic acid to form a cellulose acylate.

In the case that the ester is formed by cellulose with an aromatic carboxylic acid only, the average number of hydroxyl groups esterified with the aromatic carboxylic acid (namely, average substitution degree of the aromatic carboxylic acid) is preferably in the range of 1.0 to 3.0, and more preferably in the range of 2.0 to 3.0.

In the case that the ester is formed by cellulose with an aromatic carboxylic acid and an aliphatic carboxylic acid, the average number of hydroxyl groups esterified with the aromatic carboxylic acid (namely, average substitution degree of the aromatic carboxylic acid) is preferably in the range of 0.1 to 2.0.

In the case that the ester is formed by cellulose with an aromatic carboxylic acid and an aliphatic carboxylic acid, the aliphatic carboxylic acid preferably has 2 to 20 carbon atoms. The acyl group derived from the aliphatic

carboxylic acid preferably is acetyl, propionyl, butyryl, isobutyryl, valeryl, pivaloyl, hexanoyl, octanoyl, lauroyl or stearoyl, and more preferably is acetyl, pr0opionyl or butyryl, and most preferably is acetyl. The aliphatic acid can have a substituent group. Examples of the substituent groups are the same as the substituent groups of the substituted alkyl groups.

The cellulose ester can be prepared by a reaction between cellulose and an aromatic carboxylic acid chloride or an aromatic carboxylic acid anhydride. Preferably, the cellulose acylate is prepared by a reaction between cellulose and an aromatic carboxylic acid anhydride. The aromatic carboxylic acid anhydride is particularly preferably a mixed acid anhydride of an aromatic carboxylic acid and a halogenated carboxylic acid (e.g., trifluoroacetic acid). The mixed acid anhydride can be prepared by a reaction between an aromatic carboxylic acid and a halogenated carboxylic acid anhydride.

The reaction between cellulose and an aromatic carboxylic acid anhydride (or a mixed acid anhydride) is described in various publications (for example, Journal of Applied Polymer Science, Vol. 29, 3981-3990(1984)).

Cellulose is generally linter of cotton fiber or wood pulp. Cotton fiber can be used in combination with wood pulp.

In the reaction for synthesizing cellulose acylate, a halogenated hydrocarbon (e.g., dichloromethane) is preferably used as a reaction catalyst.

A cellulose ester of an aromatic carboxylic acid and an aliphatic carboxylic acid can be prepared by using a cellulose ester of an aliphatic carboxylic acid in place of the above-mentioned cellulose. The temperature at the reaction of the cellulose ester of an aliphatic carboxylic acid with the aromatic carboxylic acid is preferably in the range of 0 to 100°C, and more preferably in the range of 20 to 50°C. The time for the reaction is preferably longer than 30 minutes, and more preferably in the range of 30 to 300 minutes.

The cellulose ester of an aromatic carboxylic acid and an aliphatic carboxylic acid can also be prepared by using a mixed anhydride of an aromatic carboxylic acid and an aliphatic carboxylic acid in place of the above-mentioned anhydride. The temperature at the reaction of cellulose with the mixed anhydride of an aromatic carboxylic acid and an aliphatic carboxylic acid is preferably in the range of 0 to 100°C, and more preferably in the range of 20 to 50°C. The time for the reaction is preferably in the range of 30 to 300 minutes, and more preferably in the range of 60 to 200 minutes.

A solvent can be used at the above-mentioned reactions. Examples of the solvents include dichloromethane, chloroform and dioxane.

The cellulose ester has a viscosity average molecular weight preferably in the range of 150 to 700, and more preferably in the range of 250 to 550. The viscosity average molecular weight can be determined by means of Ostwald's viscometer.

[Cellulose acylate film]

A cellulose acylate, an ester derived from cellulose and an aromatic carboxylic acid, is formed into a film. The ester derived from cellulose and an aromatic carboxylic acid may be used in a form of mixture with an ester derived from cellulose and a fatty acid (e.g., acetic acid, propionic acid, butyric acid). In that case, the mixture contains the ester of cellulose and an aromatic carboxylic acid in an amount of preferably not less than 50 wt.%, more preferably not less than 60 wt.%, further preferably not less than 70 wt.%, furthermore preferably not less than 80 wt.%, and most preferably not less than 90 wt.%.

The cellulose acylate film is formed by a solvent cast method or a melt cast method. The solvent cast method is preferred to the melt cast method.

In the solvent cast method, a solution in which the cellulose acylate is dissolved in a solvent (a dope) was prepared, cast on a support and dried to form a film.

Examples of the solvent include a halogenated hydrocarbon, an ether, a ketone, an ester, an alcohol, a hydrocarbon and a mixture thereof.

The halogenated hydrocarbon preferably has 1 to 7 carbon atoms. As the halogen atom, fluorine atom or chlorine atom is preferred, and chlorine atom is more preferred. Hydrogen atoms in the hydrocarbon is substituted with the halogen atoms preferably in the range of 10 to 90 mol%. Examples of the halogenated hydrocarbon include dichloromethane, dichloroethane and chlorobenzene.

The ether has preferably 2 to 12, more preferably 3 to 8 carbon atoms. The ether may have a cyclic structure, and/or two or more ether (-O-) linkages. Examples of the ether include dibutyl ether, dimethoxyethane, 1,4-dioxane, tetrahydrofuran, methyleneglycoldimethyl ether, ethyleneglycoldiethyl ether, 1,3,5-trioxane, diethyleneglycoldiethyl ether, anisole and phenetole.

The ketone has preferably 3 to 12, more preferably 3 to 8 carbon atoms. The ketone may have a cyclic structure, and/or two or more carbonyl (-CO-) groups. Examples of the ketone include acetone, methyl ethyl ketone, diethyl ketone, methyl pentyl ketone, cyclobutanone, methyl hexyl ketone, cyclopentanone, cyclohexanone, methylcyclohexanone, 1,4-cyclohexanedione and acetophenone.

The ester has preferably 2 to 12, more preferably 3 to 8 carbon atoms. The ester may have a cyclic structure, and/or two or more ester (-COO-) linkages. Examples of the ester include methyl formate, ethyl formate, propyl formate, pentyl formate, methyl acetate, ethyl acetate, pentyl acetate, cyclohexyl acetate, methyl propionate, propyl valerate, γ-butylolactone and diacetoxyethane.

The alcohol preferably has 1 to 8 carbon atoms. The alcohol may have a cyclic structure, and/or two or more hydroxyl (-OH) groups. Examples of the alcohol include methanol, ethanol, 1-propanol, 2-propanol, 1-butanol, 2-butanol, tert-butanol, 1-pentanol, 2-methyl-2-butanol, cyclohexanol, 2-fluoroethanol, 2,2,2-trifluoroethanol and 2,2,3,3-tetrafluoro-1-propanol.

The hydrocarbon preferably has 5 to 10 carbon atoms. Examples of the hydrocarbon include cyclohexane, hexane, benzene, toluene and xylene.

A compound having two or more functional groups of ether, ketone, ester and alcohol (-O-, -CO-, -COO- and -OH) is also usable as the solvent. Examples of that solvent include ethyl 2-ethoxyacetate, 2-methoxyethanol, 2-butoxyethanol, ethyl acetoacetate and methyl acetoacetate.

The cellulose acylate can be dissolved in a solvent by (1) room temperature process, (2) high temperature process, (3) low temperature process or (4) process at low-temperature to high temperature. What process to use is determined according to the solvent. The process of (2) or (4) at high temperature is preferably conducted under a high pressure (preferably in the range of 10 to 2,000 Pa·S, more preferably in the range of 30 to 400 Pa·S).

The room temperature process (1) is generally conducted at a temperature of -10 to 40°C.

The high temperature process of (2) or (4) is conducted at a temperature of generally 70 to 240°C, preferably 80 to 220°C, more preferably 100 to 200°C, most preferably 100 to 190°C.

The low temperature process of (3) or (4) is conducted at a temperature of generally -100 to -10°C, preferably -80 to -10°C, more preferably -50 to -20°C, most preferably -50 to -30°C.

The cellulose acylate solution (dope) for forming the film has a concentration of preferably 10 to 40 wt.%, more preferably 10 to 30 wt.%.

The dope may contain various additives. Examples of the additives include a plasticizer (e.g., phosphoric esters, carboxylic esters), a deterioration inhibitor (e.g., an oxidation inhibitor, a peroxide decomposing agent, a radical inhibitor, a metal deactivating agent, an acid scavenger), an ultraviolet absorber, a colorant, fine particles, a heat stabilizer, an antistatic agent, a flame retarder and a slipping agent.

The dope is cast on a drum or a band. The surface of the drum or band is preferably polished to give a mirror plane. The surface temperature of the drum or band may be beforehand controlled at low temperature (not higher than 10°C) to shorten the time for casting to peeling procedures (Japanese Patent Publication No. 5(1993)-17844).

Two or more kinds of dopes can be simultaneously cast to form a multi-layered film of cellulose acylate. As the dopes, two dopes having high and low viscosities are generally used in that case.

The cellulose acylate film and functional layers provided thereon (e.g., adhesive layer, dye layer, antistatic layer, antihalation layer, ultraviolet absorbing layer, polarizing layer) may be formed by the simultaneous casting.

After peeled from the support, the film is further dried. The amount of solvent remaining in the film is preferably not more than 2 wt.%, more preferably not more than 1 wt.%, most preferably not more than 0.4 wt.%. The rolled film tends to shrink laterally in the drying process, and hence it is preferred to dry the film by the tenter method, in which the film is dried with the sides of the film clipped (the tenter method is described in, for example, Japanese Patent Provisional Publication No. 62(1987)-46625).

The thus-formed film can be stretched, if needed.

The thickness of the cellulose acylate film is preferably in the range of 5 to 500 μm, more preferably in the range of 10 to 250 μm, and most preferably in the range of 20 to 200 μm.

An undercoating layer, an antistatic layer, an antihalation layer or a protective layer may be provided on the film by coating.

The cellulose acylate film used in the invention is characterized by having high optical isotropy. In other words, the film shows small retardation both in plane (Re) and along a thickness direction (Rth).

For determining the retardation value in plane (Re), difference between longitudinal and lateral refractive indexes in plane is measured at 632.8 nm by means of an ellipsometer (polarization analyzer AEP-100, Shimadzu Seisakusho Ltd.). The retardation value in plane (Re) is obtained by multiplying the measured refractive index difference by the film thickness. Namely, it is calculated by the following formula:

$$Re=(nx-ny)\times d$$

in which nx is a lateral refractive index, ny is a longitudinal refractive index, and d is a thickness of the film (nm).

The smaller the retardation value in plane (Re) is, the higher the optical isotropy in plane is (the lower the

optical anisotropy is). The retardation value in plane (Re) is preferably in the range of 0 to 300 nm, more preferably in the range of 0 to 200 nm, further preferably in the range of 0 to 100 nm, furthermore preferably in the range of 0 to 50 nm, and most preferably in the range of 0 to 20 nm.

Even if the film thickness is converted into 100 μm, the retardation value in plane (Re) is preferably in the above range.

The retardation value along a thickness direction (Rth) is obtained by multiplying the birefringence at 632.8 nm along a thickness direction by the film thickness. Namely, it is calculated by the following formula:

$$Rth=[\{(nx+ny)/2\}-nz]\times d$$

in which nx is a lateral refractive index, ny is a longitudinal refractive index, nz is a refractive index along a thickness direction, and d is a thickness of the film (nm).

The smaller the retardation value along a thickness direction (Rth) is, the higher the optical isotropy along a thickness direction is (the lower the optical anisotropy is). The retardation value along a thickness direction (Rth) is preferably in the range of 0 to 600 nm, more preferably in the range of 0 to 400 nm, further preferably in the range of 0 to 300 nm, furthermore preferably in the range of 0 to 100 nm, and most preferably in the range of 0 to 70 nm.

Even if the film thickness is converted into 100 μm, the retardation value along a thickness direction (Rth) is preferably in the above range.

The cellulose acylate film used according to the present invention is also characterized by its high hydrophobicity and excellent water resistance. Consequently, the film can be made to contain a small amount of water. The water content can be easily determined according to Karl Fischer's method by a measuring apparatus (Karl Fischer water meter CA-05, Mitsubishi Chemical Co., Ltd.; water vaporizing device: VA-05, inner liquid: Aquamicron CXμ, outer liquid: Aquamicron AX, nitrogen flow: 200 ml/minute, temperature: 150°C). The concrete process for determining the water content comprises the steps of, for example, leaving a sample at 25°C, 60% (relative humidity) for 2 hours or more; weighing out 0.6 to 1.0 g of the sample; and measuring the water content by the apparatus. The water content is preferably in the range of 1.4±0.3%.

The cellulose acylate film used in the invention is further characterized by its excellent dimensional stability. The dimensional stability is evaluated by measuring deformation (shrinkage) ratio (%) based on the original size. The concrete process for evaluating the dimensional stability comprises the steps of marking two crosses on the film, measuring the distance between the crosses by means of a microscope, heating the film at 90°C for 120 hours, and measuring again the distance between the crosses to determine the shrinkage ratio. The deformation ratio is preferably in the range of 0 to -0.06%.

[Photographic material]

The cellulose acylate film is used as a support of photographic material. A typical photographic material is a silver halide photographic photosensitive material having a silver halide emulsion layer.

The silver halide photographic photosensitive material comprises a support, a silver halide emulsion layer provided thereon, and other optional non-photosensitive layers (e.g., protective layer, intermediate layer, backing layer, undercoating layer).

The silver halide emulsion layer and the non-photosensitive layers are generally hydrophilic colloidal layers. Examples of hydrophilic polymers used as the hydrophilic colloid include proteins (e.g., gelatin, colloidal albumin, casein), cellulose derivatives (e.g., carboxymethyl cellulose and hydroxyethyl cellulose), polysaccharides (e.g., agar, sodium alginate, starch derivatives) and synthetic hydrophilic colloid (e.g., polyvinyl alcohol, poly-N-vinyl pyrrolidone, polyacrylic acid co-polymer, polyacrylamide, and derivatives or partially hydrolysis products thereof). Further, a mixture of two or more compatible polymers can be used, if needed.

Gelatin is the most commonly used hydrophilic polymer.

The silver halide emulsion layer and the non-photosensitive layers may contain synthetic polymers. As the synthetic polymers, vinyl polymers are generally used. The synthetic polymers can be added to the layers in the form of aqueous latex emulsion. The synthetic polymers improves the dimensional stability. Two or more synthetic polymers can be used in combination. The above-described hydrophilic colloid and the synthetic polymers can be used in combination. The silver halide emulsion layer and the non-photosensitive layers may be subjected to film-hardening treatment with a hardening agent.

The silver halide emulsion is prepared by mixing water-soluble silver salt (e.g., silver nitrate) and water-soluble halide (e.g., potassium bromide) in the presence of water-soluble polymer (e.g., gelatin). As the silver halide, mixed silver halides such as silver chloridebromide, silver iodobromide and silver iodochloridebromide can be used, as well as silver chloride and silver bromide.

The silver halide emulsion may contain various additives so as to inhibit fogging and deterioration of sensitivity at the processes for preparing, storing or treating the photographic material. Examples of the additives include heterocyclic compounds (e.g., 4-hydroxy-6-methyl 1,3,3a,7-tetraazaindene, 3-methyl-benzotriazole, 1-phenyl-5-mercaptotetrazole), mercury-containing compounds, mercapto compounds and metal salts.

The silver halide emulsion is usually chemically sensitized. The chemical sensitization is categorized into noble metal sensitization, sulfur sensitization and reduction sensitization. In the noble metal sensitization, gold compounds (e.g., chloroaurates, gold trichloride) and salts of other noble metals (e.g., platinum, palladium, iridium, rhodium, ruthenium) are used as a sensitizer. In the sulfur sensitization, sulfur compounds which react with silver salts to form silver sulfide are used as a sensitizer. In the reduction sensitization, reducing compounds such as tin(II) salts and amines are used as a sensitizer.

The silver halide emulsion may be subjected to a spectral sensitization and/or supersensitization. The spectral sensitization is carried out with cyanine dyes such as cyanine, merocyanine and carbocyanine. Two or more sensitizing dyes may be used in combination. The cyanine dyes may be used in combination with styryl dyes.

The non-photosensitive layers may contain a whitening agent (e.g., stilbene, triazine, oxazole, coumarin compounds), an ultraviolet absorber (e.g., benzotriazole, thiazolidine, cinnamic ester compounds) and/or a light absorber. As the light absorber, various known dyes for photographic filters are usable.

A slipping agent (adhesion inhibitor), a water-insoluble substance or a surface active agent can be added in each layer. As the slipping agent (adhesion inhibitor), fatty acid amides, fatty acid esters and polyesters are usable.

An antistatic agent may be contained in the silver halide emulsion layer or the non-photosensitive layers, particularly in the non-photosensitive layer (antistatic layer) placed at the top (or bottom) of the photographic material.

Examples of the antistatic agent include hydrophilic polymers, hydrophobic polymers, biguanide compounds, anionic compounds of sulfonic type, quaternary ammonium salts of phosphoric asters, cationic compounds, nonionic compounds, amphoteric compounds, complex compounds and organic salts.

The constitution of the silver halide emulsion layer is determined according to the use of the photographic material and/or whether the material is for black and white photography or for color photography.

The silver halide emulsion may be an orthochromatic emulsion, a panchromatic emulsion, an emulsion for recording invisible light such as infrared rays or X-rays, an emulsion for color photography (e.g., emulsion containing color-forming couplers), an emulsion containing dye devilopers or an emulsion containing dyes which can be bleached out.

The emulsion for color photography may contain 2 to 4 equivalent weights of color-forming couplers. Examples of the color-forming couplers include keto-methylene yellow couplers of open-chain type (e.g., benzoylacetoanilide couplers, pivaloylacetoanilide couplers), magenta couplers (e.g., pyrazolone couplers, indazolone couplers) and cyan couplers (e.g., phenol couplers, naphthol couplers).

Colored couplers or elimination-inhibiting couplers are also usable.

A backing layer (a non-photosensitive layer provided on the side opposite to the silver halide emulsion layer) may contain carbon black. Such backing layer is removed in the washing step of developing process after prebath. In the prebath, an alkali aqueous solution having a pH value of 9.25±0.10 is used. The alkali aqueous solution may contain a water-compatible organic solvent.

The backing layer preferably contains a binder which is soluble or swells in water.

It is preferred that all steps in the processing procedure be carried out according to a beforehand designed schedule including time for processing bath. In the schedule, the time for processing bath is preferably planned so that it may be harmonious with the designed process. The time for processing bath is preferably in the range of 10 seconds to 5 minutes, more preferably in the range of 20 seconds to 1 minute. In the case where a three-tank processor is used for processing a microfilm, using two of the tanks for washing and one for stabilizing bath is preferred to using all the tanks for washing.

The process of coating the thick liquid may be performed. The time for the coating process is preferably in the range of 1 to 2 seconds.

With respect to the method and the liquid for processing the silver halide photographic material, the process for forming a silver image (back and white photographic process) or that for forming a color image (color photographic process) is adopted according to the purpose. The process is generally carried out at a temperature of 18 to 50°C.

Examples of the developing agent include dohydroxybenzenes (e.g., hydroquinone), 3-pyrazolidones (e.g., 1-phenyl-3-pyrazolidone) and aminophenols (e.g., N-methyl-p-aminophenol). Two or more kinds of developing agents can be used in combination. The developing agent may contain other known additives. Examples of the additives include a preservative, an alkali agent, a pH buffer, an antifogging agent, a solubilizing aid, a colorant, a development accelerator (e.g., quaternary salts, hydrazine, benzyl alcohol), a surface active agent, a defoaming agent, a water softener, a film hardening agent (e.g., glutaraldehyde) and a thickener.

The developing agent may be incorporated in the silver halide emulsion layer so that the photographic material can be developed in an alkali aqueous solution.

As the fixing agent in the fixing bath, thiosulfates and thiocyanates are generally used. It is also known that organic sulfur compounds can serve as the fixing agent. The fixing bath may contain a water-soluble aluminum salt as the film hardening agent.

The bleaching bath, the bleach-fix bath and the prebath thereof may contain a bleach accelerator. Examples of the bleach accelerator include compounds having a mercapto group or a disulfide group, thiazoline derivatives, thiourea derivatives, iodides, polyoxyethylene compounds, polyamine compounds and bromide ion. The compounds having a mercapto group or a disulfide group greatly accelerate bleaching.

The bleach accelerator may be incorporated in the silver halide photographic material. The bleach accelerator is particularly effective in bleach-fixing a normal color photographic film.

Examples of the preservative in the bleach-fix bath include sulfites, bisulfites, sulfinic acids and carbonylbisulfite adducts.

The silver halide color photographic material is generally subjected to washing or stabilizing process after desilvering process. In the washing process, the amount of water is determined according to various conditions such as characters of the photographic material (for example, what components such as coupler the material contains), use of the material, the temperature of water, number of the washing tanks and supplying method (for example, whether counter-current system or down-flow system is adopted).

After the washing process, the stabilizing process may be successively performed. For example, a normal color film may be subjected to a stabilizing bath containing formalin and a surface active agent as the final bath. The final stabilizing bath may contain various chelating agents and/or an antiseptic.

In order to simplify the process to develop the silver halide color photographic material in a short time, the developing agent may be incorporated. In that case, a precursor of color developing agent is preferably used. Example of the precursor include indoaniline compounds, Schiff's base compounds, aldol compounds, metal complexes and urethane compounds.

The silver halide color photographic material may contain 1-phenyl-3-pyrazolidones to accelerate color development.

The temperature of the processing liquid is in the range of 10 to 50°C. Although the temperature is usually in the range of 33 to 38°C, it may be set higher so as to accelerate the process and thereby to shorten the processing time. Further, in contrast, the temperature may be set lower to improve quality of the resultant image or to stabilize the processing liquid. For saving silver of the photographic material, intensification with cobalt or hydrogen peroxide may be performed in the process.

[Optical material]

The cellulose acylate film is also used as a protective film or a support of optical material. Typical optical materials are a polarizing plate having a polarizing membrane and a phase retarder having an optical anisotropic layer.

The polarizing plate (linearly polarizing plate) comprises two protective films and a polarizing membrane provided between them.

As the polarizing membrane, an iodine polarizing membrane, a polyene polarizing membrane and a dye polarizing membrane using dichromatic dye are known. The iodine polarizing membrane and the dye polarizing membrane are prepared from polyvinyl alcohol films.

As the protective film, a cellulose triacetate film has been conventionally and generally used. The cellulose acylate film used in the invention can be preferably used as at least one of the protective films in the polarizing plate.

The protective film may be subjected to surface treatment. Examples of the surface treatment include hardcoat treatment, antifogging treatment, anti-glare treatment and anti-reflection treatment.

The optical anisotropic layer can be prepared from a stretched birefringent film or liquid crystal molecules.

The stretched birefringent film can be obtained by stretching a polymer film. As the polymer film, films of highly birefringent synthetic polymers (such as polycarbonate and polysulfone) are generally used.

The optical anisotropic layer can be also prepared from rod-like liquid crystal molecules or discotic liquid crystal molecules. Since the liquid crystal molecules are oriented in various alignment forms, optical anisotropy can be obtained by the liquid crystal molecules more easily than by the polymer film. It is preferred that polymerizable groups be introduced into the liquid crystal molecules so as to fix the alignment by polymerization.

The phase retarder is used as, for example, an optical compensatory sheet of liquid crystal cell, a $\lambda/4$ plate or a $\lambda/2$ plate.

In the optical compensatory sheet, the optical character of the optical anisotropic layer (the alignment of liquid crystal molecules if the layer is formed from the liquid crystal molecules) is determined according to the aimed optical character of the liquid crystal cell (particularly, display mode of the cell). The $\lambda/4$ plate or the $\lambda/2$ plate adjusts the retardation in plane (Re) of the optical anisotropic layer at quarter or half of the wavelength ($\lambda$), respectively.

It is also possible to prepare an elliptically polarizing plate in which the optical compensatory sheet and the

above-described polarizing plate are combined. Further, the λ/4 plate and the above-described polarizing plate may be combined to form a circularly polarizing plate. In the elliptically or circularly polarizing plate, the support of the optical compensatory sheet and the protective film of the polarizing plate can be unified. Even in that case, the cellulose acylate film used in the invention can be used as the unified film.

The following examples 1 to 13 and 23 to 29 are reference examples.

EXAMPLE 1

Preparation of cellulose 3-methylbenzoate

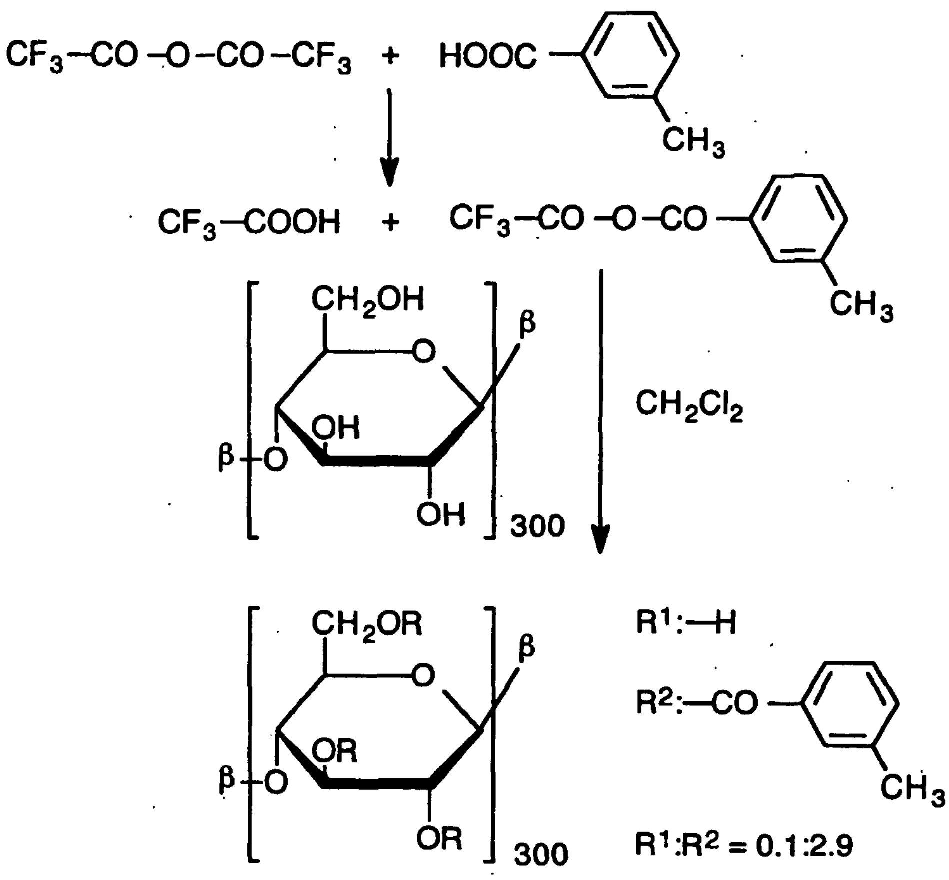


After 10.9 g (0.08 mol) of m-toluic acid and 16.8 g (0.08 mol) of trifluoroacetic acid anhydride were placed in a 200 ml of three neck distillation flask equipped with a condenser, a stirrer and a thermometer, the mixture was stirred at 50°C for 30 minutes. To the flask, 4.1 g (0.025 mol) of cellulose fine powder and 80 ml of dichloromethane were added and heated under reflux for 5 hours. After the reaction was completed, the reaction liquid was cooled to room temperature. To the cooled liquid, 500 ml of methanol was slowly poured with the liquid stirred. The reprecipitated white crystallites were collected by filtration, and dried to obtain cellulose 3-methylbenzoate. Yield was 12.3 g (95%).

The substituting degree was measured by NMR and found to be 2.9. The viscosity average molecular weight was found to be 300.

EXAMPLE 2

Preparation of cellulose 3-methoxybenzoate

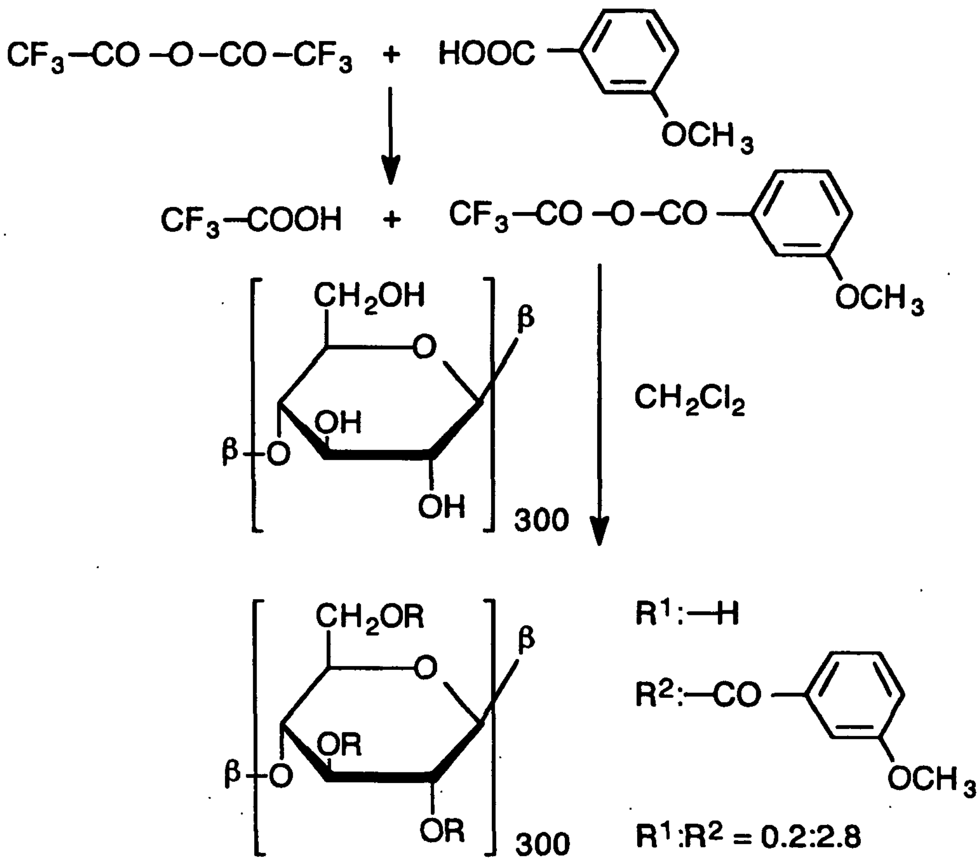


After 12.2 g (0.08 mol) of m-anisic acid and 16.8 g (0.08 mol) of trifluoroacetic acid anhydride were placed in a 200 ml of three neck distillation flask equipped with a condenser, a stirrer and a thermometer, the mixture was stirred at 50°C for 30 minutes. To the flask, 4.1 g (0.025 mol) of cellulose fine powder and 80 ml of dichloromethane were added and heated under reflux for 5 hours. After the reaction was completed, the reaction liquid was cooled to room temperature. To the cooled liquid, 500 ml of methanol was slowly poured with the liquid stirred. The reprecipitated white crystallites were collected by filtration, and dried to obtain cellulose 3-methoxybenzoate. Yield was 12.5 g (97%).

The substituting degree was measured by NMR and found to be 2.8. The viscosity average molecular weight was found to be 300.

EXAMPLE 3

Preparation of cellulose 4-chlorobenzoate

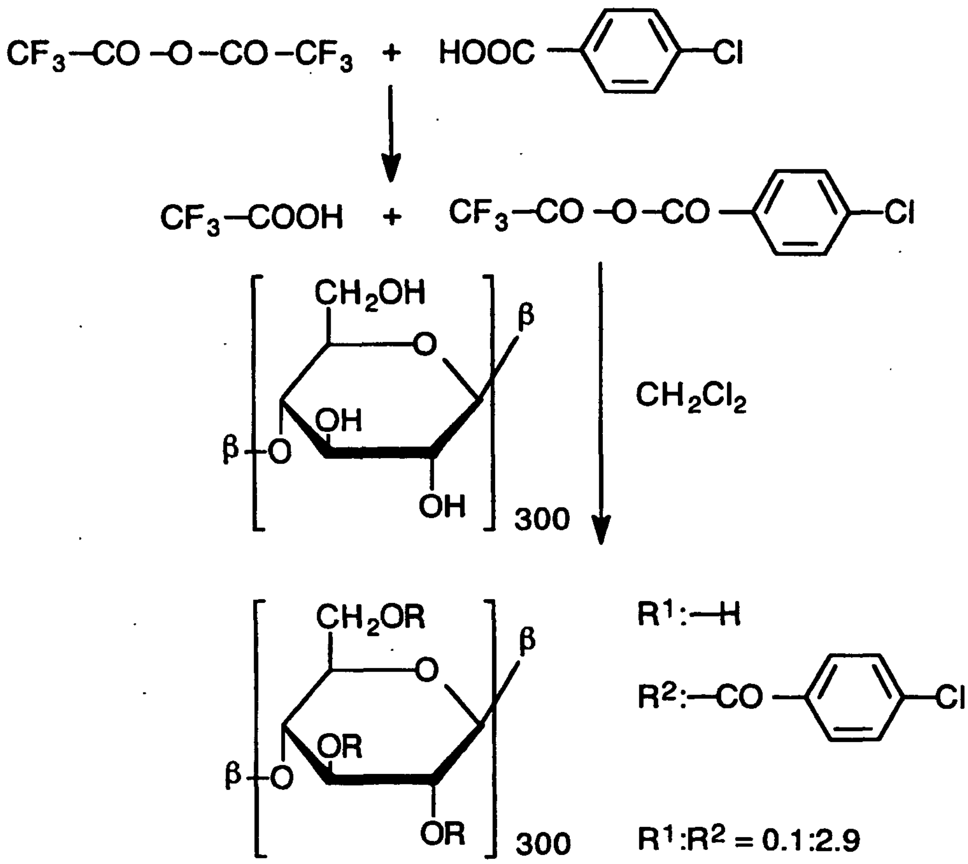


After 12.5 g (0.08 mol) of p-chlorobenzoic acid and 16.8 g (0.08 mol) of trifluoroacetic acid anhydride were placed in a 200 ml of three neck distillation flask equipped with a condenser, a stirrer and a thermometer, the mixture was stirred at 50°C for 30 minutes. To the flask, 4.1 g (0.025 mol) of cellulose fine powder and 80 ml of dichloromethane were added and heated under reflux for 5 hours. After the reaction was completed, the reaction liquid was cooled to room temperature. To the cooled liquid, 500 ml of methanol was slowly poured with the liquid stirred. The reprecipitated white crystallites were collected by filtration, and dried to obtain 4-chlorobenzoate. Yield was 13.5 g (94%).

The substituting degree was measured by NMR and found to be 2.9. The viscosity average molecular weight was found to be 300.

EXAMPLE 4

Preparation of cellulose acetate benzoate

After 6.7 g (0.055 mol) of benzoic acid and 11.6 g (0.055 mol) of trifluoroacetic acid anhydride were placed in a 200 ml of three neck distillation flask equipped with a condenser, a stirrer and a thermometer, the mixture was stirred at 50°C for 30 minutes. To the flask, 12.3 g (0.05 mol) of cellulose diacetate and 50 ml of dichloromethane were added and heated under reflux for 5 hours. After the reaction was completed, the reaction liquid was cooled to room temperature. To the cooled liquid, 50 ml of dichloromethane was added, and 500 ml of methanol was slowly poured with the liquid stirred. The precipitations were collected by filtration, and dried to obtain cellulose acetate benzoate. Yield was 16.2 g (92%).

The substituting degree of benzoic acid was measured by NMR and found to be 1.0.

EXAMPLE 5

Preparation of cellulose acetate 1-naphthoate

After 8 g (0.047 mol) of 1-naphtoic acid and 9.8 g (0.047 mol) of trifluoroacetic acid anhydride were placed in a 200 ml of three neck distillation flask equipped with a condenser, a stirrer and a thermometer, the mixture was stirred at 50°C for 30 minutes. To the flask, 10.4 g (0.042 mol) of cellulose diacetate and 50 ml of dichloromethane were added and heated under reflux for 5 hours. After the reaction was completed, the reaction liquid was cooled to room temperature. To the cooled liquid, 50 ml of dichloromethane was added, and 500 ml of methanol was slowly poured with the liquid stirred. The precipitations were collected by filtration, and dried to obtain cellulose acetate 1-naphthoate. Yield was 15.8 g (94%).

The substituting degree of 1-naphtoic acid was measured by NMR and found to be 0.98.

EXAMPLE 6

Preparation of cellulose acetate 3-methoxybenzoate

After 4.8 g (0.098 mol) of 3-methoxybenzoic acid and 20.6 g (0.098 mol) of trifluoroacetic acid anhydride were placed in a 300 ml of three neck distillation flask equipped with a condenser, a stirrer and a thermometer, the mixture was stirred at 50°C for 30 minutes. To the flask, 24.1 g (0.098 mol) of cellulose diacetate and 100 ml of dichloromethane were added and heated under reflux for 5 hours. After the reaction was completed, the reaction liquid was cooled to room temperature. To the cooled liquid, 100 ml of dichloromethane was added, and 1 liter of methanol was slowly poured with the liquid stirred. The precipitations were collected by filtration, and dried to obtain cellulose acetate 3-methoxybenzoate. Yield was 35.8 g (96%).

The substituting degree of 3-methoxybenzoic acid was measured by NMR and found to be 1.0.

EXAMPLE 7

Preparation of cellulose acetate 3-methylbenzoate

After 22.5 g (0.165 mol) of 3-methylbenzoic acid and 34.8 g (0.165 mol) of trifluoroacetic acid anhydride were placed in a 300 ml of three neck distillation flask equipped with a condenser, a stirrer and a thermometer, the mixture was stirred at 50°C for 30 minutes. To the flask, 36.9 g (0.15 mol) of cellulose diacetate and 100 ml of dichloromethane were added and heated under reflux for 5 hours. After the reaction was completed, the reaction liquid was cooled to room temperature. To the cooled liquid, 100 ml of dichloromethane was added, and 2 liters of methanol was slowly poured with the liquid stirred. The precipitations were collected by filtration, and dried to obtain cellulose acetate 3-methylbenzoate. Yield was 53.6 g (98%).

The substituting degree of 3-methylbenzoic acid was measured by NMR and found to be 0.99.

EXAMPLE 8

Preparation of cellulose acetate 3-acetamidobenzoate

After 17.9 g (0.1 mol) of 3-acetamidobenzoic acid and 21 g (0.1 mol) of trifluoroacetic acid anhydride were placed in a 300 ml of three neck distillation flask equipped with a condenser, a stirrer and a thermometer, the mixture was stirred at 50°C for 30 minutes. To the flask, 24.6 g (0.1 mol) of cellulose diacetate and 100 ml of dichloromethane were added and heated under reflux for 5 hours. After the reaction was completed, the reaction liquid was cooled to room temperature. To the cooled liquid, 100 ml of dichloromethane was added, and 2 liters of methanol was slowly poured with the liquid stirred. The precipitations were collected by filtration, and dried to obtain cellulose acetate 3-acetamidobenzoate. Yield was 38.7 g (95%).

The substituting degree of 3-acetamidobenzoic acid was measured by NMR and found to be 1.0.

EXAMPLE 9

Preparation of cellulose acetate 4-chlorobenzoate

After 12.5 g (0.08 mol) of 4-chlorobenzoic acid and 12.5 g (0.08 mol) of trifluoroacetic acid anhydride were placed in a 300 ml of three neck distillation flask equipped with a condenser, a stirrer and a thermometer, the mixture

was stirred at 50°C for 30 minutes. To the flask, 19.7 g (0.08 mol) of cellulose diacetate and 80 ml of dichloromethane were added and heated under reflux for 5 hours. After the reaction was completed, the reaction liquid was cooled to room temperature. To the cooled liquid, 80 ml of dichloromethane was added, and 1.5 liter of methanol was slowly poured with the liquid stirred. The precipitations were collected by filtration, and dried to obtain cellulose acetate 4-chlorobenzoate. Yield was 29.6 g (96%).

The substituting degree of 4-chlorobenzoic acid was measured by NMR and found to be 0.98.

EXAMPLE 10

Preparation of cellulose acetate 4-acetylbenzoate

After 32.8 g (0.2 mol) of 4-acetylbenzoic acid and 42 g (0.2 mol) of trifluoroacetic acid anhydride were placed in a 300 ml of three neck distillation flask equipped with a condenser, a stirrer and a thermometer, the mixture was stirred at 50°C for 30 minutes. To the flask, 20.4 g (0.1 mol) of cellulose monoacetate and 100 ml of dichloromethane were added and heated under reflux for 5 hours. After the reaction was completed, the reaction liquid was cooled to room temperature. To the cooled liquid, 100 ml of dichloromethane was added, and 2 liters of methanol was slowly poured with the liquid stirred. The precipitations were collected by filtration, and dried to obtain cellulose acetate 4-acetylbenzoate. Yield was 47.1 g (95%).

The substituting degree of 4-acetylbenzoic acid was measured by NMR and found to be 1.99.

EXAMPLE 11

Cellulose 3-methylbenzoate obtained in Example 1 was dissolved in dichloromethane to prepare 19.0 wt.% solution (dope). The solution was then cast on a support, and cooled to form a cellulose 3-methylbenzoate film of 50 μm thickness.

The obtained film was not opaque but transparent. The water content was in the range of 1.0±0.3%, and the dimensional stability was in the range of -0.05 to -0.02%.

EXAMPLE 12

Cellulose 3-methoxybenzoate obtained in Example 2 was dissolved in dichloromethane to prepare 19.0 wt.% solution (dope). The solution was then cast on a support, and cooled to form a cellulose 3-methoxybenzoate film of 50 μm thickness.

The obtained film was not opaque but transparent. The water content was in the range of 1.0±0.3%, and the dimensional stability was in the range of -0.05 to -0.02%.

EXAMPLE 13

Cellulose 4-chlorobenzoate obtained in Example 3 was dissolved in dichloromethane to prepare 19.0 wt.% solution (dope). The solution was then cast on a support, and cooled to form a cellulose 4-chlorobenzoate film of 50 μm thickness.

The obtained film was not opaque but transparent. The water content was in the range of 1.0±0.3%, and the dimensional stability was in the range of -0.05 to -0.02%.

EXAMPLE 14

In place of a cellulose triacetate film, the cellulose 3-methylbenzoate film prepared in Example 11 was used as a support of a silver halide color photographic material (which is the sample 21 in Japanese Patent Provisional Publication No. 2000-330247).

The thus-obtained photographic material was evaluated. As a result, the obtained material exhibited the same performance (sensitivity and fogging) as the photographic material having the cellulose triacetate support.

EXAMPLE 15

In place of a cellulose triacetate film, the cellulose 3-methoxybenzoate film prepared in Example 12 was used as a support of a silver halide color photographic material (which is the sample 21 in Japanese Patent Provisional Publication No. 2000-330247).

The thus-obtained photographic material was evaluated. As a result, the obtained material exhibited the same

performance (sensitivity and fogging) as the photographic material having the cellulose triacetate support.

EXAMPLE 16

In place of a cellulose triacetate film, the cellulose 4-chlorobenzoate film prepared in Example 13 was used as a support of a silver halide color photographic material (which is the sample 21 in Japanese Patent Provisional Publication No. 2000-330247).

The thus-obtained photographic material was evaluated. As a result, the obtained material exhibited the same performance (sensitivity and fogging) as the photographic material having the cellulose triacetate support.

EXAMPLE 17

In place of a cellulose triacetate film, the cellulose 3-methylbenzoate film prepared in Example 11 was used as a support of an optical compensatory sheet (which is the example 3 in Japanese Patent No. 2,587,398).

The thus-obtained optical compensatory sheet was evaluated. As a result, the obtained compensatory sheet exhibited performance (haze and dimensional stability) superior to the optical compensatory sheet having the cellulose triacetate support.

EXAMPLE 18

In place of a cellulose triacetate film, the cellulose 3-methoxybenzoate film prepared in Example 12 was used as a support of an optical compensatory sheet (which is the example 3 in Japanese Patent No. 2,587,398).

The thus-obtained optical compensatory sheet was evaluated. As a result, the obtained compensatory sheet exhibited performance (haze and dimensional stability) superior to the optical compensatory sheet having the cellulose triacetate support.

EXAMPLE 19

In place of a cellulose triacetate film, the cellulose 4-chlorobenzoate film prepared in Example 13 was used as a support of an optical compensatory sheet (which is the example 3 in Japanese Patent No. 2,587,398).

The thus-obtained optical compensatory sheet was evaluated. As a result, the obtained compensatory sheet exhibited performance (haze and dimensional stability) superior to the optical compensatory sheet having the cellulose triacetate support.

EXAMPLE 20

A polyvinyl alcohol film of 80 μm thickness was five times stretched in an aqueous solution of iodine, and dried to prepare a polarizing membrane.

Two cellulose 3-methylbenzoate films prepared in Example 11 were saponified, and then laminated on both surfaces of the polarizing membrane with a water-soluble epoxy adhesive. The films were placed so that the slow axis of each film at 633 nm might be perpendicular to the transparent axis of the polarizing membrane in plane.

The thus-obtained polarizing plate was installed in a liquid crystal display, and then evaluated. As a result, it was confirmed that the polarizing plate exhibited excellent polarizing characters.

EXAMPLE 21

Two cellulose 3-methoxybenzoate films prepared in Example 12 were saponified, and then laminated on both surfaces of the polarizing membrane prepared in Example 20 with a water-soluble epoxy adhesive. The films were placed so that the slow axis of each film at 633 nm might be perpendicular to the transparent axis of the polarizing membrane in plane.

The thus-obtained polarizing plate was installed in a liquid crystal display, and then evaluated. As a result, it was confirmed that the polarizing plate exhibited excellent polarizing characters.

EXAMPLE 22

Two cellulose 4-chlorobenzoate films prepared in Example 13 were saponified, and then laminated on both surfaces of the polarizing membrane prepared in Example 20 with a water-soluble epoxy adhesive. The films were placed so that the slow axis of each film at 633 nm might be perpendicular to the transparent axis of the polarizing

membrane in plane.

The thus-obtained polarizing plate was installed in a liquid crystal display, and then evaluated. As a result, it was confirmed that the polarizing plate exhibited excellent polarizing characters.

EXAMPLES 23 to 29

Cellulose esters obtained in Examples 4 to 10 were dissolved in dichloromethane to prepare 19.0 wt.% solutions (dope). Each of the solutions was then cast on a support, and cooled to form a cellulose ester film of 50 μm thickness.

The obtained film was not opaque but transparent. The film was conditioned for 2 hours at the temperature of 25°C and the relative humidity of 60%, and the water content was measured. Further, the dimensional stability of the conditioned film was measured. The results are set forth in Table 1.

COMPARISON EXAMPLE 1

Cellulose triacetate was dissolved in dichloromethane to prepare 19.0 wt.% solutions (dope). The solution was then cast on a support, and cooled to form a cellulose triacetate film of 50 μm thickness.

The obtained film was not opaque but transparent. The film was conditioned for 2 hours at the temperature of 25°C and the relative humidity of 60%, and the water content was measured. Further, the dimensional stability of the conditioned film was measured. The results are set forth in Table 1.

TABLE 1

| Film | Cellulose acylate | Water content (wt.%) | Dimensional stability |
|---|---|---|---|
| Example 23 | Example 4 | 1.0 | -0.05% |
| Example 24 | Example 5 | 0.5 | -0.01% |
| Example 25 | Example 6 | 1.1 | -0.06% |
| Example 26 | Example 7 | 0.8 | -0.03% |
| Example 27 | Example 8 | 1.2 | -0.07% |
| Example 28 | Example 9 | 0.9 | -0.05% |
| Example 29 | Example 10 | 0.7 | -0.03% |
| Comparison Example 1 | Cellulose triacetate | 1.4 | -0.10% |

## Claims

1. A photographic material which comprises a support consisting of a cellulose acylate film and a silver halide emulsion layer provided on the support, wherein the cellulose acylate film comprises a cellulose ester of an aromatic carboxylic acid, said aromatic carboxylic acid having a substituent group selected from the group consisting of a halogen atom, cyano, an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 1 to 20 carbon atoms, a carbonamido group having 1 to 20 carbon atoms, a sulfonamido group having 1 to 20 carbon atoms and an ureido group having 1 to 20 carbon atoms.

2. The photographic material as claimed in claim 1, wherein the aromatic carboxylic acid is benzoic acid.

3. The photographic material as claimed in claim 1, wherein the aromatic carboxylic acid has one to three substituent groups selected from the group consisting of a halogen atom, cyano, an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 1 to 20 carbon atoms, a carbonamido group having 1 to 20 carbon atoms, a sulfonamido group having 1 to 20 carbon atoms and an ureido group having 1 to 20 carbon atoms.

4. The photographic material as claimed in claim 1, wherein the aromatic carboxylic acid has a substituent group selected from the group consisting of a halogen atom, cyano, an alkyl group having 1 to 12 carbon atoms, an alkoxy group having 1 to 12 carbon atoms, an aryl group having 6 to 12 carbon atoms, an aryloxy group having 6 to 12 carbon atoms, an acyl group having 1 to 12 carbon atoms and a carbonamido group having 1 to 12 carbon atoms.

5. The photographic material as claimed in claim 1, wherein the cellulose ester has an average substitution degree of the aromatic carboxylic acid in the range of 1.0 to 3.0.

6. The photographic material as claimed in claim 1, wherein the cellulose acylate film is formed according to a solvent cast method.

7. An optical material which comprises two protective films consisting of cellulose acylate films and a polarizing membrane provided between the films, wherein at least one of the films comprises a cellulose ester of an aromatic carboxylic acid, said aromatic carboxylic acid having a substituent group selected from the group consisting of a halogen atom, cyano, an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 1 to 20 carbon atoms, a carbonamido group having 1 to 20 carbon atoms, a sulfonamido group having 1 to 20 carbon atoms and an ureido group having 1 to 20 carbon atoms.

8. The optical material as claimed in claim 7, wherein the aromatic carboxylic acid is benzoic acid.

9. The optical material as claimed in claim 7, wherein the aromatic carboxylic acid has one to three substituent groups selected from the group consisting of a halogen atom, cyano, an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 1 to 20 carbon atoms, a carbonamido group having 1 to 20 carbon atoms, a sulfonamido group having 1 to 20 carbon atoms and an ureido group having 1 to 20 carbon atoms.

10. The optical material as claimed in claim 7, wherein the aromatic carboxylic acid has a substituent group selected from the group consisting of a halogen atom, cyano, an alkyl group having 1 to 12 carbon atoms, an alkoxy group having 1 to 12 carbon atoms, an aryl group having 6 to 12 carbon atoms, an aryloxy group having 6 to 12 carbon atoms, an acyl group having 1 to 12 carbon atoms and a carbonamido group having 1 to 12 carbon atoms.

11. The optical material as claimed in claim 7, wherein the cellulose ester has an average substitution degree of the aromatic carboxylic acid in the range of 1.0 to 3.0.

12. The optical material as claimed in claim 7, wherein the cellulose acylate film is formed according to a solvent cast method.

13. An optical material which comprises a support consisting of a cellulose acylate film and an optical anisotropic layer formed from liquid crystal molecules provided on the support, wherein the cellulose acylate film comprises a cellulose ester of an aromatic carboxylic acid, said aromatic carboxylic acid having a substituent group selected from the group consisting of a halogen atom, cyano, an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 1 to 20 carbon atoms, a carbonamido group having 1 to 20 carbon atoms, a sulfonamido group having 1 to 20 carbon atoms and an ureido group having 1 to 20 carbon atoms.

14. The optical material as claimed in claim 13, wherein the aromatic carboxylic acid is benzoic acid.

15. The optical material as claimed in claim 13, wherein the aromatic carboxylic acid has one to three substituent groups selected from the group consisting of a halogen atom, cyano, an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 1 to 20 carbon atoms, a carbonamido group having 1 to 20 carbon atoms, a sulfonamido group having 1 to 20 carbon atoms and an ureido group having 1 to 20 carbon atoms.

16. The optical material as claimed in claim 13, wherein the aromatic carboxylic acid has a substituent group selected from the group consisting of a halogen atom, cyano, an alkyl group having 1 to 12 carbon atoms, an alkoxy group having 1 to 12 carbon atoms, an aryl group having 6 to 12 carbon atoms, an aryloxy group having 6 to 12 carbon atoms, an acyl group having 1 to 12 carbon atoms and a carbonamido group having 1 to 12 carbon atoms.

17. The optical material as claimed in claim 13, wherein the cellulose ester has an average substitution degree of the aromatic carboxylic acid in the range of 1.0 to 3.0.

18. The optical material as claimed in claim 13, wherein the cellulose acylate film is formed according to a solvent cast

method.

**19.** A photographic material which comprises a support consisting of a cellulose acylate film and a silver halide emulsion layer provided on the support, wherein the cellulose acylate film comprises a cellulose ester of a carboxylic acid, said carboxylic acid being a mixture of an aromatic carboxylic acid and an aliphatic carboxylic acid.

**20.** The photographic material as claimed in claim 19, wherein the aromatic carboxylic acid has a substituent group selected from the group consisting of a halogen atom, cyano, an alkyl group, an alkoxy group, an aralkyl group, an aryl group, an aryloxy group, an acyl group, a carbonamido group and a sulfonamido group.

**21.** The photographic material as claimed in claim 19, wherein the aliphatic carboxylic acid has 2 to 20 carbon atoms.

**22.** The photographic material as claimed in claim 19, wherein the cellulose ester has an average substitution degree of the aromatic carboxylic acid in the range of 0.1 to 2.0.

**23.** The photographic material as defined in claim 19, wherein the cellulose acylate film is formed according to a solvent cast method.

**24.** An optical material which comprises two protective films consisting of cellulose acylate films and a polarizing membrane provided between the films, wherein at least one of the films comprises a cellulose ester of an carboxylic acid, said carboxylic acid being a mixture of an aromatic carboxylic acid and an aliphatic carboxylic acid.

**25.** The optical material as claimed in claim 24, wherein the aromatic carboxylic acid has a substituent group selected from the group consisting of a halogen atom, cyano, an alkyl group, an alkoxy group, an aralkyl group, an aryl group, an aryloxy, group, an acyl group, a carbonamido group and a sulfonamide group.

**26.** The optical material as claimed in claim 24, wherein the aliphatic carboxylic acid has 2 to 20 carbon atoms.

**27.** The optical material as claimed in claim 24, wherein the cellulose ester has an average substitution degree of the aromatic carboxylic acid in the range of 0.1 to 2.0.

**28.** The optical material as defined in claim 24, wherein the cellulose acylate film is formed according to a solvent cast method.

**29.** An optical material which comprises a support consisting of a cellulose acylate film and an optical anisotropic layer formed from liquid crystal molecules provided on the support, wherein the cellulose acylate film comprises a cellulose ester of a carboxylic acid, said carboxylic acid being a mixture of an aromatic carboxylic acid and an aliphatic carboxylic acid.

**30.** The optical material as claimed in claim 29, wherein the aromatic carboxylic acid has a substituent group selected from the group consisting of a halogen atom, cyano, an alkyl group, an alkoxy group, an aralkyl group, an aryl group, an aryloxy group, an acyl group, a carbonamido group and a sulfonamido group.

**31.** The optical material as claimed in claim 29, wherein the aliphatic carboxylic acid has 2 to 20 carbon atoms.

**32.** The optical material as claimed in claim 29, wherein the cellulose ester has an average substitution degree of the aromatic carboxylic acid in the range of 0.1 to 2.0.

**33.** The optical material as defined in claim 29, wherein the cellulose acylate film is formed according to a solvent cast method.

**Patentansprüche**

**1.** Photographisches Material, umfassend einen Träger, der aus einem Celluloseacylatfilm besteht, und eine Silberhalogenidemulsionsschicht, die auf dem Träger aufgebracht ist, wobei der Celluloseacylatfilm einen Celluloseester einer aromatischen Carbonsäure umfasst und wobei die aromatische Carbonsäure mit einem Substituenten substituiert ist, ausgewählt aus der Gruppe, bestehend aus einem Halogenatom, einer Cyanogruppe, einer Alkylgruppe mit 1 bis 20 Kohlenstoffatomen, einer Alkoxygruppe mit 1 bis 20 Kohlenstoffatomen, einer Arylgruppe mit 6 bis 20 Kohlenstoffatomen, einer Aryloxygruppe mit 6 bis 20 Kohlenstoffatomen, einer Acylgruppe mit 1 bis 20 Kohlenstoffatomen, einer Carbonamidogruppe mit 1 bis 20 Kohlenstoffatomen, einer Sulfonamidogruppe mit 1 bis 20 Kohlenstoffatomen und einer Ureidogruppe mit 1 bis 20 Kohlenstoffatomen.

**2.** Photographisches Material nach Anspruch 1, wobei die aromatische Carbonsäure Benzoesäure ist.

**3.** Photographisches Material nach Anspruch 1, wobei die aromatische Carbonsäure mit 1 bis 3 Substituenten substituiert ist, ausgewählt aus der Gruppe, bestehend aus einem Halogenatom, einer Cyanogruppe, einer Alkylgruppe mit 1 bis 20 Kohlenstoffatomen, einer Alkoxygruppe mit 1 bis 20 Kohlenstoffatomen, einer Arylgruppe mit 6 bis 20 Kohlenstoffatomen, einer Aryloxygruppe mit 6 bis 20 Kohlenstoffatomen, einer Acylgruppe mit 1 bis 20 Kohlenstoffatomen, einer Carbonamidogruppe mit 1 bis 20 Kohlenstoffatomen, einer Sulfonamidogruppe mit 1 bis 20 Kohlenstoffatomen und einer Ureidogruppe mit 1 bis 20 Kohlenstoffatomen.

**4.** Photographisches Material nach Anspruch 1, wobei die aromatische Carbonsäure mit einem Substituenten substituiert ist, ausgewählt aus der Gruppe, bestehend aus einem Halogenatom, einer Cyanogruppe, einer Alkylgruppe mit 1 bis 12 Kohlenstoffatomen, einer Alkoxygruppe mit 1 bis 12 Kohlenstoffatomen, einer Arylgruppe mit 6 bis 12 Kohlenstoffatomen, einer Aryloxygruppe mit 6 bis 12 Kohlenstoffatomen, einer Acylgruppe mit 1 bis 12 Kohlenstoffatomen und einer Carbonamidogruppe mit 1 bis 12 Kohlenstoffatomen.

**5.** Photographisches Material nach Anspruch 1, wobei der Celluloseester einen mittleren Substitutionsgrad mit der aromatischen Carbonsäure im Bereich von 1,0 bis 3,0 hat.

**6.** Photographisches Material nach Anspruch 1, wobei der Celluloseacylatfilm unter Anwendung eines Lösungsgießverfahrens hergestellt wurde.

**7.** Optisches Material, umfassend zwei Schutzfilme, die aus Celluloseacylatfilmen bestehen, und eine polarisierende Membran, die zwischen den Filmen angeordnet ist, wobei mindestens einer der Filme einen Celluloseester einer aromatischen Carbonsäure umfasst und wobei die aromatische Carbonsäure mit einem Substituenten substituiert ist, ausgewählt aus der Gruppe, bestehend aus einem Halogenatom, einer Cyanogruppe, einer Alkylgruppe mit 1 bis 20 Kohlenstoffatomen, einer Alkoxygruppe mit 1 bis 20 Kohlenstoffatomen, einer Arylgruppe mit 6 bis 20 Kohlenstoffatomen, einer Aryloxygruppe mit 6 bis 20 Kohlenstoffatomen, einer Acylgruppe mit 1 bis 20 Kohlenstoffatomen, einer Carbonamidogruppe mit 1 bis 20 Kohlenstoffatomen, einer Sulfonamidogruppe mit 1 bis 20 Kohlenstoffatomen und einer Ureidogruppe mit 1 bis 20 Kohlenstoffatomen.

**8.** Optisches Material nach Anspruch 7, wobei die aromatische Carbonsäure Benzoesäure ist.

**9.** Optisches Material nach Anspruch 7, wobei die aromatische Carbonsäure mit 1 bis 3 Substituenten substituiert ist, ausgewählt aus der Gruppe, bestehend aus einem Halogenatom, einer Cyanogruppe, einer Alkylgruppe mit 1 bis 20 Kohlenstoffatomen, einer Alkoxygruppe mit 1 bis 20 Kohlenstoffatomen, einer Arylgruppe mit 6 bis 20 Kohlenstoffatomen, einer Aryloxygruppe mit 6 bis 20 Kohlenstoffatomen, einer Acylgruppe mit 1 bis 20 Kohlenstoffatomen, einer Carbonamidogruppe mit 1 bis 20 Kohlenstoffatomen, einer Sulfonamidogruppe mit 1 bis 20 Kohlenstoffatomen und einer Ureidogruppe mit 1 bis 20 Kohlenstoffatomen.

**10.** Optisches Material nach Anspruch 7, wobei die aromatische Carbonsäure mit einem Substituenten substituiert ist, ausgewählt aus der Gruppe, bestehend aus einem Halogenatom, einer Cyanogruppe, einer Alkylgruppe mit 1 bis 12 Kohlenstoffatomen, einer Alkoxygruppe mit 1 bis 12 Kohlenstoffatomen, einer Arylgruppe mit 6 bis 12 Kohlenstoffatomen, einer Aryloxygruppe mit 6 bis 12 Kohlenstoffatomen, einer Acylgruppe mit 1 bis 12 Kohlenstoffatomen und einer Carbonamidogruppe mit 1 bis 12 Kohlenstoffatomen.

**11.** Optisches Material nach Anspruch 7, wobei der Celluloseester einen mittleren Substitutionsgrad mit der aromatischen Carbonsäure im Bereich von 1,0 bis 3,0 hat.

**12.** Optisches Material nach Anspruch 7, wobei der Celluloseacylatfilm unter Anwendung eines Lösungsgießverfahrens hergestellt wurde.

**13.** Optisches Material, umfassend einen Träger, der aus einem Celluloseacylatfilm besteht, und eine optisch anisotrope Schicht aus Flüssigkristallmolekülen, die auf dem Träger aufgebracht ist, wobei der Celluloseacylatfilm einen

Celluloseester einer aromatischen Carbonsäure umfasst und wobei die aromatische Carbonsäure mit einem Substituenten substituiert ist, ausgewählt aus der Gruppe, bestehend aus einem Halogenatom, einer Cyanogruppe, einer Alkylgruppe mit 1 bis 20 Kohlenstoffatomen, einer Alkoxygruppe mit 1 bis 20 Kohlenstoffatomen, einer Arylgruppe mit 6 bis 20 Kohlenstoffatomen, einer Aryloxygruppe mit 6 bis 20 Kohlenstoffatomen, einer Acylgruppe mit 1 bis 20 Kohlenstoffatomen, einer Carbonamidogruppe mit 1 bis 20 Kohlenstoffatomen, einer Sulfonamidogruppe mit 1 bis 20 Kohlenstoffatomen und einer Ureidogruppe mit 1 bis 20 Kohlenstoffatomen.

**14.** Optisches Material nach Anspruch 13, wobei die aromatische Carbonsäure Benzoesäure ist.

**15.** Optisches Material nach Anspruch 13, wobei die aromatische Carbonsäure mit 1 bis 3 Substituenten substituiert ist, ausgewählt aus der Gruppe, bestehend aus einem Halogenatom, einer Cyanogruppe, einer Alkylgruppe mit 1 bis 20 Kohlenstoffatomen, einer Alkoxygruppe mit 1 bis 20 Kohlenstoffatomen, einer Arylgruppe mit 6 bis 20 Kohlenstoffatomen, einer Aryloxygruppe mit 6 bis 20 Kohlenstoffatomen, einer Acylgruppe mit 1 bis 20 Kohlenstoffatomen, einer Carbonamidogruppe mit 1 bis 20 Kohlenstoffatomen, einer Sulfonamidogruppe mit 1 bis 20 Kohlenstoffatomen und einer Ureidogruppe mit 1 bis 20 Kohlenstoffatomen.

**16.** Optisches Material nach Anspruch 13, wobei die aromatische Carbonsäure mit einem Substituenten substituiert ist, ausgewählt aus der Gruppe, bestehend aus einem Halogenatom, einer Cyanogruppe, einer Alkylgruppe mit 1 bis 12 Kohlenstoffatomen, einer Alkoxygruppe mit 1 bis 12 Kohlenstoffatomen, einer Arylgruppe mit 6 bis 12 Kohlenstoffatomen, einer Aryloxygruppe mit 6 bis 12 Kohlenstoffatomen, einer Acylgruppe mit 1 bis 12 Kohlenstoffatomen und einer Carbonamidogruppe mit 1 bis 12 Kohlenstoffatomen.

**17.** Optisches Material nach Anspruch 13, wobei der Celluloseester einen mittleren Substitutionsgrad mit der aromatischen Carbonsäure im Bereich von 1,0 bis 3,0 hat.

**18.** Optisches Material nach Anspruch 13, wobei der Celluloseacylatfilm unter Anwendung eines Lösungsgießverfahrens hergestellt wurde.

**19.** Photographisches Material, umfassend einen Träger, der aus einem Celluloseacylatfilm besteht, und eine Silberhalogenidemulsionsschicht, die auf dem Träger aufgebracht ist, wobei der Celluloseacylatfilm einen Celluloseester einer Carbonsäure umfasst und wobei die Carbonsäure ein Gemisch aus einer aromatischen Carbonsäure und einer aliphatischen Carbonsäure ist.

**20.** Photographisches Material nach Anspruch 19, wobei die aromatische Carbonsäure mit einem Substituenten substituiert ist, ausgewählt aus der Gruppe, bestehend aus einem Halogenatom, einer Cyanogruppe, einer Alkylgruppe, einer Alkoxygruppe, einer Aralkylgruppe, einer Arylgruppe, einer Aryloxygruppe, einer Acylgruppe, einer Carbonamidogruppe und einer Sulfonamidogruppe.

**21.** Photographisches Material nach Anspruch 19, wobei die aliphatische Carbonsäure 2 bis 20 Kohlenstoffatome enthält.

**22.** Photographisches Material nach Anspruch 19, wobei der Celluloseester einen mittleren Substitutionsgrad mit der aromatischen Carbonsäure im Bereich von 0,1 bis 2,0 hat.

**23.** Photographisches Material nach Anspruch 19, wobei der Celluloseacylatfilm unter Anwendung eines Lösungsgießverfahrens hergestellt wurde.

**24.** Optisches Material, umfassend zwei Schutzfilme, die aus Celluloseacylatfilmen bestehen, und eine polarisierende Membran, die zwischen den Filmen angeordnet ist, wobei mindestens einer der Filme einen Celluloseester einer Carbonsäure umfasst und wobei die Carbonsäure ein Gemisch aus einer aromatischen Carbonsäure und einer aliphatischen Carbonsäure ist.

**25.** Optisches Material nach Anspruch 24, wobei die aromatische Carbonsäure mit einem Substituenten substituiert ist, ausgewählt aus der Gruppe, bestehend aus einem Halogenatom, einer Cyanogruppe, einer Alkylgruppe, einer Alkoxygruppe, einer Aralkylgruppe, einer Arylgruppe, einer Aryloxygruppe, einer Acylgruppe, einer Carbonamidogruppe und einer Sulfonamidogruppe.

**26.** Optisches Material nach Anspruch 24, wobei die aliphatische Carbonsäure 2 bis 20 Kohlenstoffatome enthält.

27. Optisches Material nach Anspruch 24, wobei der Celluloseester einen mittleren Substitutionsgrad mit der aromatischen Carbonsäure im Bereich von 0,1 bis 2,0 hat.

28. Optisches Material nach Anspruch 24, wobei der Celluloseacylatfilm unter Anwendung eines Lösungsgießverfahrens hergestellt wurde.

29. Optisches Material, umfassend einen Träger, der aus einem Celluloseacylatfilm besteht, und eine optisch anisotrope Schicht aus Flüssigkristallmolekülen, die auf dem Träger aufgebracht ist, wobei der Celluloseacylatfilm einen Celluloseester einer Carbonsäure umfasst und wobei die Carbonsäure ein Gemisch aus einer aromatischen Carbonsäure und einer aliphatischen Carbonsäure ist.

30. Optisches Material nach Anspruch 29, wobei die aromatische Carbonsäure mit einem Substituenten substituiert ist, ausgewählt aus der Gruppe, bestehend aus einem Halogenatom, einer Cyanogruppe, einer Alkylgruppe, einer Alkoxygruppe, einer Aralkylgruppe, einer Arylgruppe, einer Aryloxygruppe, einer Acylgruppe, einer Carbonamidogruppe und einer Sulfonamidogruppe.

31. Optisches Material nach Anspruch 29, wobei die aliphatische Carbonsäure 2 bis 20 Kohlenstoffatome enthält.

32. Optisches Material nach Anspruch 29, wobei der Celluloseester einen mittleren Substitutionsgrad mit der aromatischen Carbonsäure im Bereich von 0,1 bis 2,0 hat.

33. Optisches Material nach Anspruch 29, wobei der Celluloseacylatfilm unter Anwendung eines Lösungsgießverfahrens hergestellt wurde.

**Revendications**

1. Matériau photographique qui comprend un support constitué d'un film d'acylate de cellulose et une couche d'émulsion d'halogénure d'argent disposée sur le support, dans lequel le film d'acylate de cellulose comprend un ester de cellulose d'un acide carboxylique aromatique, ledit acide carboxylique aromatique ayant un groupe substituant choisi dans le groupe constitué d'un atome d'halogène, d'un cyano, d'un groupe alkyle ayant 1 à 20 atomes de carbone, d'un groupe alcoxy ayant 1 à 20 atomes de carbone, d'un groupe aryle ayant 6 à 20 atomes de carbone, d'un groupe aryloxy ayant 6 à 20 atomes de carbone, d'un groupe acyle ayant 1 à 20 atomes de carbone, d'un groupe carbonamido ayant 1 à 20 atomes de carbone, d'un groupe sulfonamido ayant 1 à 20 atomes de carbone et d'un groupe uréido ayant 1 à 20 atomes de carbone.

2. Matériau photographique selon la revendication 1, dans lequel l'acide carboxylique aromatique est l'acide benzoïque.

3. Matériau photographique selon la revendication 1, dans lequel l'acide carboxylique aromatique a un à trois groupes substituants choisis dans le groupe constitué d'un atome d'halogène, d'un cyano, d'un groupe alkyle ayant 1 à 20 atomes de carbone, d'un groupe alcoxy ayant 1 à 20 atomes de carbone, d'un groupe aryle ayant 6 à 20 atomes de carbone, d'un groupe aryloxy ayant 6 à 20 atomes de carbone, d'un groupe acyle ayant 1 à 20 atomes de carbone, d'un groupe carbonamido ayant 1 à 20 atomes de carbone, d'un groupe sulfonamido ayant 1 à 20 atomes de carbone et d'un groupe uréido ayant 1 à 20 atomes de carbone.

4. Matériau photographique selon la revendication 1, dans lequel l'acide carboxylique aromatique a un groupe substituant choisi dans le groupe constitué d'un atome d'halogène, d'un cyano, d'un groupe alkyle ayant 1 à 12 atomes de carbone, d'un groupe alcoxy ayant 1 à 12 atomes de carbone, d'un groupe aryle ayant 6 à 12 atomes de carbone, d'un groupe aryloxy ayant 6 à 12 atomes de carbone, d'un groupe acyle ayant 1 à 12 atomes de carbone et d'un groupe carbonamido ayant 1 à 12 atomes de carbone.

5. Matériau photographique selon la revendication 1, dans lequel l'ester de cellulose a un degré moyen de substitution de l'acide carboxylique aromatique compris dans l'intervalle allant de 1,0 à 3,0.

6. Matériau photographique selon la revendication 1, dans lequel le film d'acylate de cellulose est formé selon un procédé de moulage par trempage en solution.

7. Matériau optique qui comprend deux films protecteurs constitués de films d'acylate de cellulose et une membrane polarisante disposée entre les films, dans lequel au moins un des films comprend un ester de cellulose d'un acide carboxylique aromatique, ledit acide carboxylique aromatique ayant un groupe substituant choisi dans le groupe constitué d'un atome d'halogène, d'un cyano, d'un groupe alkyle ayant 1 à 20 atomes de carbone, d'un groupe alcoxy ayant 1 à 20 atomes de carbone, d'un groupe aryle ayant 6 à 20 atomes de carbone, d'un groupe aryloxy ayant 6 à 20 atomes de carbone, d'un groupe acyle ayant 1 à 20 atomes de carbone, d'un groupe carbonamido ayant 1 à 20 atomes de carbone, d'un groupe sulfonamido ayant 1 à 20 atomes de carbone et d'un groupe uréido ayant 1 à 20 atomes de carbone.

8. Matériau optique selon la revendication 7, dans lequel l'acide carboxylique aromatique est l'acide benzoïque.

9. Matériau optique selon la revendication 7, dans lequel l'acide carboxylique aromatique a un à trois groupes substituants choisis dans le groupe constitué d'un atome d'halogène, d'un cyano, d'un groupe alkyle ayant 1 à 20 atomes de carbone, d'un groupe alcoxy ayant 1 à 20 atomes de carbone, d'un groupe aryle ayant 6 à 20 atomes de carbone, d'un groupe aryloxy ayant 6 à 20 atomes de carbone, d'un groupe acyle ayant 1 à 20 atomes de carbone, d'un groupe carbonamido ayant 1 à 20 atomes de carbone, d'un groupe sulfonamido ayant 1 à 20 atomes de carbone et d'un groupe uréido ayant 1 à 20 atomes de carbone.

10. Matériau optique selon la revendication 7, dans lequel l'acide carboxylique aromatique a un groupe substituant choisi dans le groupe constitué d'un atome d'halogène, d'un cyano, d'un groupe alkyle ayant 1 à 12 atomes de carbone, d'un groupe alcoxy ayant 1 à 12 atomes de carbone, d'un groupe aryle ayant 6 à 12 atomes de carbone, d'un groupe aryloxy ayant 6 à 12 atomes de carbone, d'un groupe acyle ayant 1 à 12 atomes de carbone et d'un groupe carbonamido ayant 1 à 12 atomes de carbone.

11. Matériau optique selon la revendication 7, dans lequel l'ester de cellulose a un degré moyen de substitution de l'acide carboxylique aromatique compris dans l'intervalle allant de 1,0 à 3,0.

12. Matériau optique selon la revendication 7, dans lequel le film d'acylate de cellulose est formé selon un procédé de moulage par trempage en solution.

13. Matériau optique qui comprend un support constitué d'un film d'acylate de cellulose et une couche optique anisotrope formée à partir de molécules de cristaux liquides disposée sur le support, dans lequel le film d'acylate de cellulose comprend un ester de cellulose d'un acide carboxylique aromatique, ledit acide carboxylique aromatique ayant un groupe substituant choisi dans le groupe constitué d'un atome d'halogène, d'un cyano, d'un groupe alkyle ayant 1 à 20 atomes de carbone, d'un groupe alcoxy ayant 1 à 20 atomes de carbone, d'un groupe aryle ayant 6 à 20 atomes de carbone, d'un groupe aryloxy ayant 6 à 20 atomes de carbone, d'un groupe acyle ayant 1 à 20 atomes de carbone, d'un groupe carbonamido ayant 1 à 20 atomes de carbone, d'un groupe sulfonamido ayant 1 à 20 atomes de carbone et d'un groupe uréido ayant 1 à 20 atomes de carbone.

14. Matériau optique selon la revendication 13, dans lequel l'acide carboxylique aromatique est l'acide benzoïque.

15. Matériau optique selon la revendication 13, dans lequel l'acide carboxylique aromatique a un à trois groupes substituants choisis dans le groupe constitué d'un atome d'halogène, d'un cyano, d'un groupe alkyle ayant 1 à 20 atomes de carbone, d'un groupe alcoxy ayant 1 à 20 atomes de carbone, d'un groupe aryle ayant 6 à 20 atomes de carbone, d'un groupe aryloxy ayant 6 à 20 atomes de carbone, d'un groupe acyle ayant 1 à 20 atomes de carbone, d'un groupe carbonamido ayant 1 à 20 atomes de carbone, d'un groupe sulfonamido ayant 1 à 20 atomes de carbone et d'un groupe uréido ayant 1 à 20 atomes de carbone.

16. Matériau optique selon la revendication 13, dans lequel l'acide carboxylique aromatique a un groupe substituant choisi dans le groupe constitué d'un atome d'halogène, d'un cyano, d'un groupe alkyle ayant 1 à 12 atomes de carbone, d'un groupe alcoxy ayant 1 à 12 atomes de carbone, d'un groupe aryle ayant 6 à 12 atomes de carbone, d'un groupe aryloxy ayant 6 à 12 atomes de carbone, d'un groupe acyle ayant 1 à 12 atomes de carbone et d'un groupe carbonamido ayant 1 à 12 atomes de carbone.

17. Matériau optique selon la revendication 13, dans lequel l'ester de cellulose a un degré moyen de substitution de l'acide carboxylique aromatique compris dans l'intervalle allant de 1,0 à 3,0.

18. Matériau optique selon la revendication 13, dans lequel le film d'acylate de cellulose est formé selon un procédé

de moulage par trempage en solution.

**19.** Matériau photographique qui comprend un support constitué d'un film d'acylate de cellulose et une couche d'émulsion d'halogénure d'argent disposée sur le support, dans lequel le film d'acylate de cellulose comprend un ester de cellulose d'un acide carboxylique, ledit acide carboxylique étant un mélange d'un acide carboxylique aromatique et d'un acide carboxylique aliphatique.

**20.** Matériau photographique selon la revendication 19, dans lequel l'acide carboxylique aromatique a un groupe substituant choisi dans le groupe constitué d'un atome d'halogène, d'un cyano, d'un groupe alkyle, d'un groupe alcoxy, d'un groupe aralkyle, d'un groupe aryle, d'un groupe aryloxy, d'un groupe acyle, d'un groupe carbonamido et d'un groupe sulfonamido.

**21.** Matériau photographique selon la revendication 19, dans lequel l'acide carboxylique aliphatique a 2 à 20 atomes de carbone.

**22.** Matériau photographique selon la revendication 19, dans lequel l'ester de cellulose a un degré moyen de substitution de l'acide carboxylique aromatique compris dans l'intervalle allant de 0,1 à 2,0.

**23.** Matériau photographique tel que défini dans la revendication 19, dans lequel le film d'acylate de cellulose est formé selon un procédé de moulage par trempage en solution.

**24.** Matériau optique qui comprend deux films protecteurs constitués de films d'acylate de cellulose et une membrane polarisante disposée entre les films, dans lequel au moins un des films comprend un ester de cellulose d'un acide carboxylique, ledit acide carboxylique étant un mélange d'un acide carboxylique aromatique et d'un acide carboxylique aliphatique.

**25.** Matériau optique selon la revendication 24, dans lequel l'acide carboxylique aromatique a un groupe substituant choisi dans le groupe constitué d'un atome d'halogène, d'un cyano, d'un groupe alkyle, d'un groupe alcoxy, d'un groupe aralkyle, d'un groupe aryle, d'un groupe aryloxy, d'un groupe acyle, d'un groupe carbonamido et d'un groupe sulfonamido.

**26.** Matériau optique selon la revendication 24, dans lequel l'acide carboxylique aliphatique a 2 à 20 atomes de carbone.

**27.** Matériau optique selon la revendication 24, dans lequel l'ester de cellulose a un degré moyen de substitution de l'acide carboxylique aromatique compris dans l'intervalle allant de 0,1 à 2,0.

**28.** Matériau optique tel que défini dans la revendication 24, dans lequel le film d'acylate de cellulose est formé selon un procédé de moulage par trempage en solution.

**29.** Matériau optique qui comprend un support constitué d'un film d'acylate de cellulose et une couche optique anisotrope formée à partir de molécules de cristaux liquides disposée sur le support, dans lequel le film d'acylate de cellulose comprend un ester de cellulose d'un acide carboxylique, ledit acide carboxylique étant un mélange d'un acide carboxylique aromatique et d'un acide carboxylique aliphatique.

**30.** Matériau optique selon la revendication 29, dans lequel l'acide carboxylique aromatique a un groupe substituant choisi dans le groupe constitué d'un atome d'halogène, d'un cyano, d'un groupe alkyle, d'un groupe alcoxy, d'un groupe aralkyle, d'un groupe aryle, d'un groupe aryloxy, d'un groupe acyle, d'un groupe carbonamido et d'un groupe sulfonamido.

**31.** Matériau optique selon la revendication 29, dans lequel l'acide carboxylique aliphatique a 2 à 20 atomes de carbone.

**32.** Matériau optique selon la revendication 29, dans lequel l'ester de cellulose a un degré moyen de substitution de l'acide carboxylique aromatique compris dans l'intervalle allant de 0,1 à 2,0.

**33.** Matériau optique tel que défini dans la revendication 29, dans lequel le film d'acylate de cellulose est formé selon un procédé de moulage par trempage en solution.